# EUROPEAN PATENT APPLICATION

(11) **EP 3 010 190 A1**
(43) Date of publication of application: **20.04.2016**
(21) Application number: 14811039.8
(22) Date of filing: 03.06.2014
(51) Int. Cl.: H04L 27/01, H04B 7/005, H04L 27/34

(54) **TRANSMISSION DEVICE, SIGNAL TRANSMISSION METHOD FOR TRANSMISSION DEVICE, RECEPTION DEVICE, SIGNAL RECEPTION METHOD FOR RECEPTION DEVICE, AND PROGRAM**

(30) Priority: 12.06.2013 JP 2013124234
(71) Applicant: Sony Corporation, Tokyo 108-0075 (JP)
(72) Inventor: HIRAYAMA Yuichi, Tokyo 108-0075 (JP); FUTAMI Tetsuhiro, Tokyo 108-0075 (JP); MICHAEL Lachlan, Tokyo 108-0075 (JP); IKEDA Tamotsu, Tokyo 108-0075 (JP)
(74) Representative: Witte, Weller & Partner Patentanwälte mbB
(86) International application number: PCT/JP2014/064673
(87) International publication number: WO 2014/199866

(57) **Abstract**

The present technology relates to a transmission device and a signal transmission method of the transmission device, a reception device and a signal reception method of the reception device, and a program which enable demodulation or decoding through high-speed compensation of nonlinear distortion.

In the transmission device, an acquisition unit acquires distortion information which indicates distortion of an information signal which is based on nonlinearity of a transmission path of the information signal, a compensation unit compensates the information signal to be transmitted using the acquired distortion information so that distortion of the received information signal is offset, and a transmission unit transmits distortion compensation information which indicates that the information signal has been compensated by including the distortion compensation information in a control signal of the information signal.

## Description

### Technical Field

The present technology relates to a transmission device and a signal transmission method of the transmission device, a reception device and a signal reception method of the reception device, and a program, and particularly to a transmission device and a signal transmission method of the transmission device, a reception device and a signal reception method of the reception device, and a program which enable demodulation or decoding through high-speed compensation of nonlinear distortion.

### Background Art

In wireless digital transmission of (satellite and terrestrial) digital broadcasting, mobile telephones, and wireless local area networks (LANs), as information to be transmitted becomes highly diversified and increases in volume, amplitude phase shift keying (APSK), which exhibits more excellent efficiency in frequency use than existing phase shift keying (PSK), has been introduced in recent years. APSK, however, has a greater dynamic range in variation of amplitude than PSK, and thus it is heavily affected by distortion of a transmission path caused by nonlinearity of a transmission amplifier or a reception amplifier.

As one technology used at a receiver side to compensate such nonlinear distortion, a method of calculating a likelihood of phase error detection or error correction decoding in carrier synchronization with reference to an average signal point after nonlinear distortion is known as disclosed in Commentary A of ARIB STD-B44 (Non-Patent Literature 1).

Herein, STD-B44 is a transmission standard for advanced broadband satellite digital broadcasting (advanced BS), and corresponds to a follow-up of the transmission standard (ARIB STD-B20) for BS digital broadcasting that is currently provided in Japan. In the advanced BS, transmission of a higher capacity than that under existing standards is realized by newly employing circular type 16APSK or 32APSK. In addition, transmission efficiency is enhanced by employing low density parity check (LDPC) codes as error correction codes.

In a transmission format of the advanced BS, a known sequence that is called a transmission signal point arrangement signal is multiplexed and transmitted for the purpose of compensating nonlinear distortion for such an APSK signal.

For example, when signal points of 32APSK are transmitted, signal points of nonlinearly distorted reception signals are distributed around a point from which the amplitude or phase is deviated more than that of original transmission signal points. For this reason, when hard decision or computation of likelihood is performed with the arrangement of the original transmission signal points as ideal signal points, performance of carrier synchronization or error correction decoding remarkably deteriorates.

When transmission signal point arrangement signals are sequentially transmitted with all signal points for the same modulation scheme as that of transmission main signals of corresponding modulation slots in a known order, a receiver averages reception signals of a corresponding section for each signal point, and thereby arrangement of the center point of distribution of nonlinearly distorted signal points can be obtained. As a result, by performing carrier synchronization or error correction decoding with the arrangement of the center point of the distribution of the signal points obtained as described above as ideal signal points, the nonlinear distortion can be compensated.

A demodulation circuit of the related art applied to a receiver of the advanced BS is constituted as follows.

That is, the demodulation circuit of the related art is mainly constituted by a carrier synchronization circuit, a signal point averaging circuit, a signal point arrangement table, a hard decision device, a phase error detector, a likelihood calculator, and an error correction decoder.

The carrier synchronization circuit is generally configured as a digital phase locked loop (PLL) circuit, and performs a synchronization process of reception signals with respect to frequencies and phases of carriers so that dispersion of phase errors detected by a phase error detector is minimized.

The signal point averaging circuit generates signal point arrangement information of all signal points with respect to synchronization detection signals output by the carrier synchronization circuit by averaging I and Q components of transmission signal point arrangement signals for each signal point.

The signal point arrangement information generated by the signal point averaging circuit is input to the signal point arrangement table, and the relation of coordinates of the signal points on the I-Q plane on which the same binary sequences as multivalued binary sequences are mapped is stored as a table.

The hard decision device computes a boundary line on the I-Q plane of when a signal point is hard-decided based on the signal point arrangement table and performs a hard decision process based on the same boundary line.

The phase error detector detects a phase error by obtaining the phase difference between a hard decision value of the hard decision device and the synchronization detection signal.

The likelihood calculator calculates a log likelihood ratio (LLR) of each bit constituting the binary sequence mapped with each signal point, with the signal point arrangement read from the signal point arrangement table as ideal signal points.

The error correction decoder performs decoding of an LDPC code based on the LLR to output decoded data.

With such a demodulation circuit, carrier synchronization or error correction decoding that brings less deterioration can also be performed for reception signals of which the amplitude or phase at signal points is radically shifted due to nonlinear distortion in distribution.

### Citation List

### Non-Patent Literature

Non-Patent Literature: http://www.arib.or.jp/english/html/overview/doc/2-STD-B44v1_0.pdf

### Summary of Invention

### Technical Problem

However, in a demodulation circuit of the related art, it takes time to perform an averaging process on reception signals for each signal point. As a result, it is difficult to perform demodulation or decoding by compensating nonlinear distortion at a higher speed.

The present technology takes the above-described circumstances into consideration, and aims to enable demodulation or decoding by compensating nonlinear distortion at a high speed.

### Solution to Problem

An aspect of the present technology is a transmission device including: an acquisition unit configured to acquire distortion information which indicates distortion of an information signal which is based on nonlinearity of a transmission path of the information signal; a compensation unit configured to compensate the information signal to be transmitted using the acquired distortion information so that distortion of the received information signal is offset; and a transmission unit configured to transmit distortion compensation information which indicates that the information signal has been compensated by including the distortion compensation information in a control signal of the information signal.

The distortion information can be expressed by any type of information including absolute coordinate information of all transmission signal points after distortion, absolute coordinate information of some transmission signal points after distortion, relative coordinate information of all other transmission signal points with respect to a transmission signal point that serves as a reference after distortion, relative coordinate information of some other transmission signal points with respect to a transmission signal point that serves as a reference after distortion, data of a graph with respect to input and output characteristics of a transmission path, relative coordinates of a reception signal point that has been affected by distortion of a transmission signal point, or a magnification ratio and a rotation angle of a radius with respect to an origin.

The distortion information can be generated based on distortion detected by receiving the transmitted information signal as a reference or distortion obtained by detecting a characteristic of the transmission path in advance.

The control signal can be a TMCC signal of ARIB STD-B44.

The distortion information can be generated based on a transmission signal point arrangement signal included in the TMCC signal.

An aspect of the present technology is a signal transmission method of a transmission device and a program with respect to the transmission device.

Another aspect of the present technology is a reception device including: an acquisition unit configured to acquire an information signal to be transmitted including distortion compensation information which indicates that distortion which is based on nonlinearity of a transmission path of the information signal has been compensated in a control signal; a supply unit configured to supply transmission signal point information for demodulating a signal of which distortion has been compensated when the distortion compensation information is acquired; and a demodulation unit configured to demodulate the information signal to an original signal using the supplied transmission signal point information.

The distortion information can be expressed by any type of information including absolute coordinate information of all transmission signal points after distortion, absolute coordinate information of some transmission signal points after distortion, relative coordinate information of all other transmission signal points with respect to a transmission signal point that serves as a reference after distortion, relative coordinate information of some other transmission signal points with respect to a transmission signal point that serves as a reference after distortion, data of a graph with respect to input and output characteristics of a transmission path, relative coordinates of a reception signal point that has been affected by distortion of a transmission signal point, or a magnification ratio and a rotation angle of a radius with respect to an origin.

The distortion information can be generated based on distortion detected by receiving the transmitted information signal as a reference or distortion obtained by detecting a characteristic of the transmission path in advance.

When the distortion compensation information indicates that the information signal has not been compensated, the demodulation unit can demodulate the information signal to an original signal using a signal obtained by averaging a transmission signal point arrangement signal included in the control signal.

Another aspect of the present technology is a signal reception method of a reception device and a program with respect to the reception device.

According to an aspect of the present technology, an acquisition unit acquires distortion information which indicates distortion of an information signal which is based on nonlinearity of a transmission path of the information signal, a compensation unit compensates the information signal to be transmitted using the acquired distortion information so that distortion of the received information signal is offset, and a transmission unit transmits distortion compensation information which indicates that the information signal has been compensated by including the distortion compensation information in a control signal of the information signal.

According to still another aspect of the present technology, an acquisition unit acquires an information signal to be transmitted including distortion compensation information which indicates that distortion has been compensated based on nonlinearity of a transmission path of the information signal in a control signal, a supply unit supplies transmission signal point information for modulating a signal of which distortion has been compensated when the distortion compensation information is acquired, and a demodulation unit demodulates the information signal to an original signal using the supplied transmission signal point information.

### Advantageous Effects of Invention

According to the present technology, demodulation or decoding can be performed by compensating nonlinear distortion at a higher speed.

### Brief Description of Drawings

[FIG. 1] FIG. 1 is a diagram for describing modulation schemes.
[FIG. 2] FIG. 2 is a diagram for describing signal points.
[FIG. 3] FIG. 3 is a diagram for describing unevenness of reception signal points.
[FIG. 4] FIG. 4 is a diagram for describing a relation between transmission signal points and reception signal points.
[FIG. 5] FIG. 5 is a block diagram illustrating a configuration of a satellite transponder model.
[FIG. 6] FIG. 6 is a diagram illustrating characteristics of a TWTA.
[FIG. 7] FIG. 7 is a diagram illustrating transmission signal points and reception signal points of transmission signals that have been modulated using 8PSK as coordinate positions on an I-Q plane.
[FIG. 8] FIG. 8 is a diagram illustrating transmission signal points and reception signal points of transmission signals that have been modulated using 32APSK as coordinate positions on the I-Q plane.
[FIG. 9] FIG. 9 is a diagram illustrating a configuration of an embodiment of a transmission and reception system of the present technology.
[FIG. 10] FIG. 10 is a block diagram showing a configuration of an embodiment of a transmission device of the present technology.
[FIG. 11] FIG. 11 is a flowchart describing a transmission process of the transmission device according to a first embodiment of the present technology.
[FIG. 12] FIG. 12 is a diagram for describing a configuration of TMCC information.
[FIG. 13] FIG. 13 is a diagram for describing the procedure of configuring the TMCC information.
[FIG. 14] FIG. 14 is a diagram for describing a configuration of a frame.
[FIG. 15] FIG. 15 is a diagram for describing transmission signal point arrangement information.
[FIG. 16] FIG. 16 is a diagram for describing transmission signal point arrangement information.
[FIG. 17] FIG. 17 is a block diagram illustrating a configuration of an embodiment of a reference device of the present technology.
[FIG. 18] FIG. 18 is a block diagram illustrating a configuration of an embodiment of a quadrature detection unit of the reference device of the present technology.
[FIG. 19] FIG. 19 is a block diagram illustrating a configuration of an embodiment of an LDPC code decoding unit of the reference device of the present technology.
[FIG. 20] FIG. 20 is a flowchart describing a reference process of the reference device of the present technology.
[FIG. 21] FIG. 21 is a flowchart describing a quadrature detection process of the quadrature detection unit of the reference device of the present technology.
[FIG. 22] FIG. 22 is a flowchart describing an LDPC code decoding process of the LDPC code decoding unit of the reference device of the present technology.
[FIG. 23] FIG. 23 is a block diagram illustrating a configuration of a reception device according to the first embodiment of the present technology.
[FIG. 24] FIG. 24 is a block diagram illustrating a configuration of a quadrature detection unit of the reception device according to the first embodiment of the present technology.
[FIG. 25] FIG. 25 is a block diagram illustrating a configuration of an LDPC code decoding unit of the reception device according to the first embodiment of the present technology.
[FIG. 26] FIG. 26 is a flowchart describing a reception process of the reception device of the present technology.
[FIG. 27] FIG. 27 is a flowchart describing a quadrature detection process of the quadrature detection unit of the reception device according to the first embodiment of the present technology.
[FIG. 28] FIG. 28 is a flowchart describing an LDPC code decoding process of the LDPC code decoding unit of the reception device according to the first embodiment of the present technology.
[FIG. 29] FIG. 29 is a block diagram illustrating a configuration of the quadrature detection unit of the reception device according to a second embodiment of the present technology.
[FIG. 30] FIG. 30 is a block diagram illustrating a configuration of the LDPC code decoding unit of the reception device according to the second embodiment of the present technology.
[FIG. 31] FIG. 31 is a flowchart describing a quadrature detection process of the quadrature detection unit of the reception device according to the second embodiment of the present technology.
[FIG. 32] FIG. 32 is a flowchart describing an LDPC code decoding process of the LDPC code decoding unit of the reception device according to the second embodiment of the present technology.
[FIG. 33] FIG. 33 is a flowchart describing a transmission process of the transmission device according to a third embodiment of the present technology.
[FIG. 34] FIG. 34 is a block diagram illustrating a configuration of the quadrature detection unit of the reception device according to the third embodiment of the present technology.
[FIG. 35] FIG. 35 is a block diagram illustrating a configuration of the LDPC code decoding unit of the reception device according to the third embodiment of the present technology.
[FIG. 36] FIG. 36 is a flowchart describing a quadrature detection process of the quadrature detection unit of the reception device according to the third embodiment of the present technology.
[FIG. 37] FIG. 37 is a flowchart describing an LDPC code decoding process of the LDPC code decoding unit of the reception device according to the third embodiment of the present technology.
[FIG. 38] FIG. 38 is a block diagram illustrating a configuration example of a personal computer.

### Description of Embodiments

Hereinafter, preferred embodiments of the present technology will be described in the following order with reference to the appended drawings.

### <First embodiment (distortion information)>

1 Modulation scheme
2 Signal point
3 Distortion of signal point
4 Satellite transponder model
5 Transmission and reception system
6 Transmission device
7 First transmission process
8 Configuration of TMCC information
9 Configuration procedure of TMCC information
10 Configuration of a frame
11 Reference device
12 Reference process
13 Reception device
14 Reception process

### <Second embodiment (timer)>

15 Transmission device
16 Reception device
17 Quadrature detection process
18 LDPC code decoding process

### <Third embodiment (advance distortion compensation)>

19 Transmission device
20 Transmission process
21 Reference device
22 Reception device
23 Quadrature detection process
24 LDPC code decoding process

### <Modification example>

### <Others>

### <First embodiment (distortion information)>

### [Modulation scheme]

First, modulation schemes of advanced broadband satellite digital broadcasting (advanced BS) (ARIB STD-B44), which is next-generation satellite digital broadcasting of Japan, will be described.

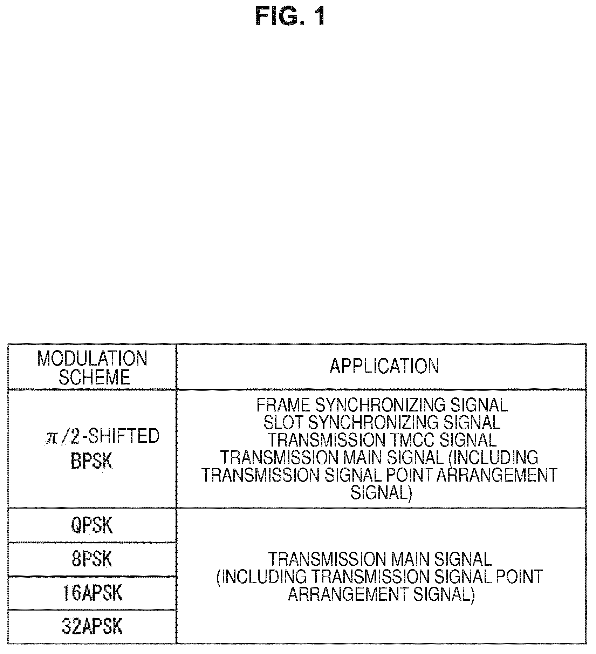

FIG. 1 is a diagram for describing the modulation schemes. As shown in the drawing, the modulation schemes including pi (the Greek letter)/2-shifted BPSK, QPSK, 8PSK, 16APSK, and 32APSK can be used in the advanced BS. The first modulation scheme is used for frame synchronizing signals, slot synchronizing signals, transmission TMCC signals, and transmission main signals (including transmission signal point arrangement signals). The four remaining modulation schemes are used for transmission main signals (including transmission signal point arrangement signals).

### [Signal point]

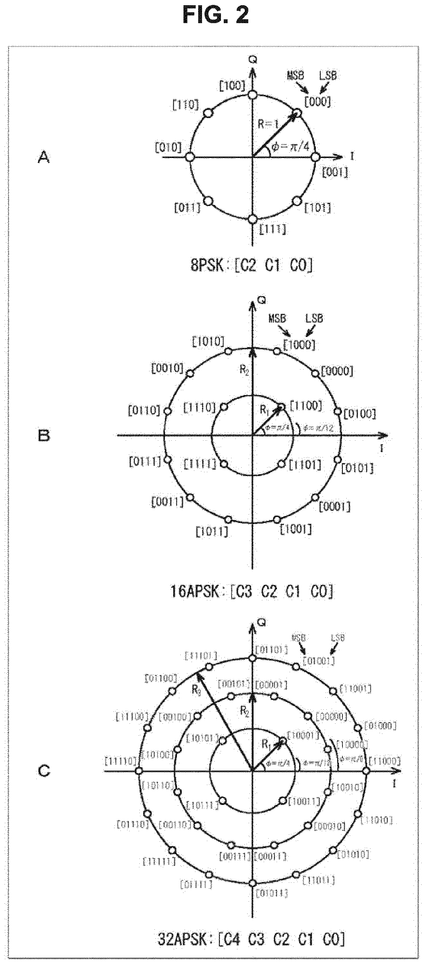

FIG. 2 is a diagram for describing signal points. FIG. 2 illustrates signal points of transmission signals as coordinate points on the I-Q plane with respect to 8PSK in A, 16APSK in B, and 32APSK in C of the drawing. In these drawings, the horizontal axis is an I axis and the vertical axis is a Q axis, and the distance from the center point at which the IQ coordinates are (0, 0) to a signal point (radius) in each drawing corresponds to an amplitude. Each point that is plotted as IQ coordinates is set as a signal point corresponding to a symbol of the transmission signal, and in transmission signals modulated using 8PSK, 16APSK, and 32APSK, 8, 16, and 32 kinds of symbols can be transmitted respectively.

In 8PSK, 8 signal points are present within a fixed radius from the center point, and in 16APSK, 4 signal points are present at the shortest distance from the center point and 12 signal points are present at the longest distance from the center point. In the 32APSK, 4 signal points are present at the shortest distance from the center point, 16 signal points are present at the longest distance from the center point, and 12 signal points are present at an intermediate distance therefrom.

### [Distortion of signal points]

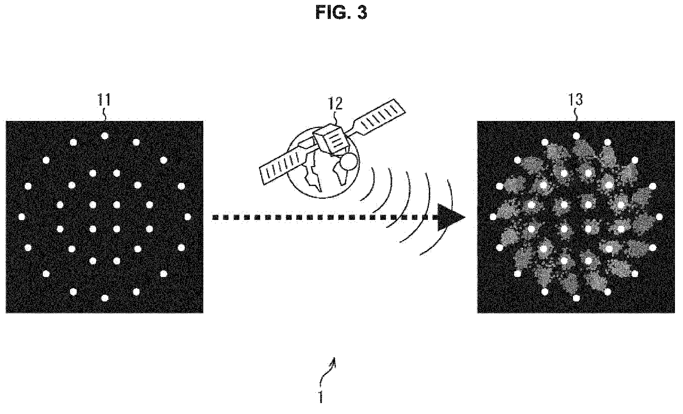

FIG. 3 is a diagram for describing unevenness of reception signal points. As illustrated in the drawing, in an advanced BS system 1, transmission signal points 11 from a transmitting station are transmitted via a satellite 12 and received by a receiving station as reception signal points 13.

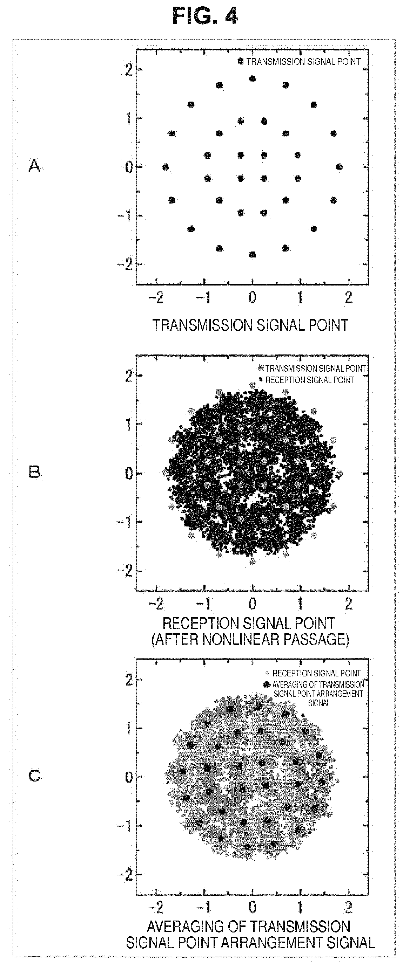

FIG. 4 is a diagram for describing a relation between transmission signal points and reception signal points. In FIG. 4, signal points of 32APSK are shown. A of FIG. 4 expresses transmission signal points, and B of FIG. 4 expresses the transmission signal points and reception signal points. That is, when the transmission signal points shown in A of FIG. 4 are transmitted via the satellite 12, they are received as the reception signal points shown in B of FIG. 4. B of FIG. 4 also shows the reception signal points corresponding to the transmission signal points. As is obvious from B of FIG. 4, the coordinates of the reception signal points are deviated from the positions of the transmission signal points. This is mainly because the satellite 12 has nonlinear transmission paths.

### [Satellite transponder model]

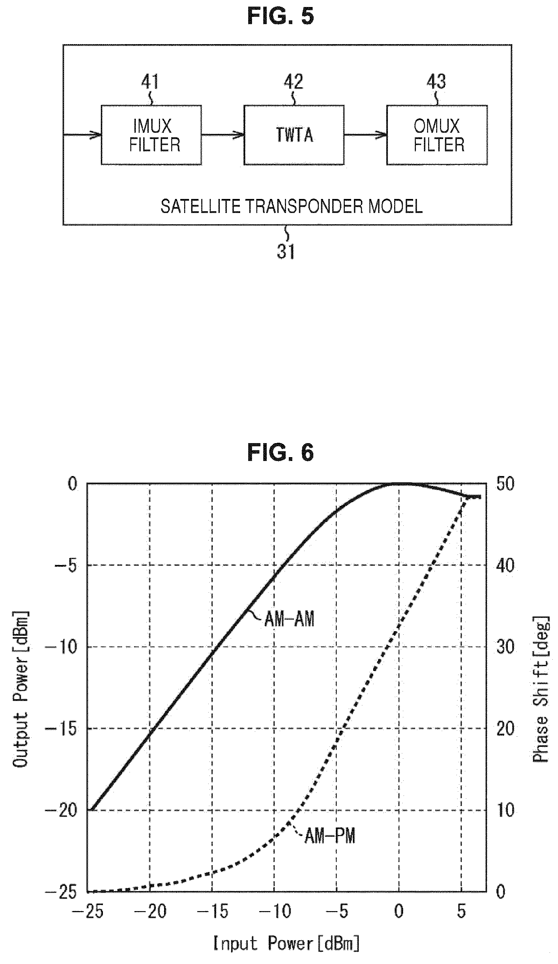

FIG. 5 is a block diagram illustrating a configuration of a satellite transponder model. The satellite 12 can be modeled as a filter satellite transponder model 31 as shown in FIG. 5. The satellite transponder model 31 is constituted by an input demultiplexer (IMUX) filter 41, a travelling wave amplifier (TWTA) 42, and an output multiplexer (OMUX). A transmission signal from the transmitting station 11 is processed by the IMUX filter 41, and then amplified by the TWTA 42. The output is further processed by the OMUX 43, and then transmitted to the receiving station.

FIG. 6 is a diagram illustrating characteristics of the TWTA 42. The relation between the amplitude of an input signal and the amplitude of an output signal of the TWTA 42 is shown as AM-AM in FIG. 6. The amplitude of the output signal linearly increases as the amplitude of the input signal increases; however, after the value of the amplitude of the input signal increases up to a predetermined value, the amplitude of the output signal gradually saturates and then slowly decreases.

On the other hand, the relation between the amplitude of the input signal and the phase of the output signal of the TWTA 42 is shown as AM-PM in FIG. 6. The phase of the output signal gradually rotates as the amplitude of the input signal increases, and after the value of the amplitude of the input signal increases up to a predetermined value, the amount of the rotation radically increases in a substantially linear shape. Then, after the value of the amplitude of the input signal further increases to a predetermined value, the rotation of the phase of the output signal saturates.

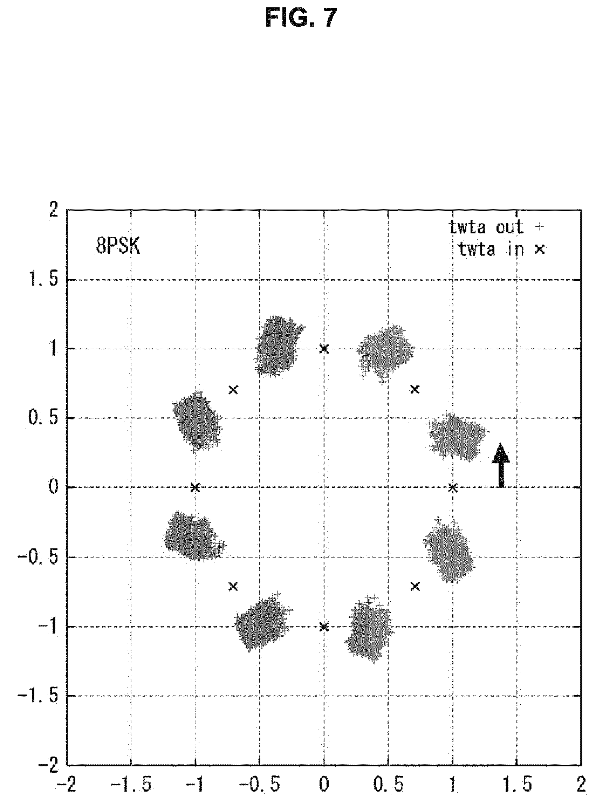

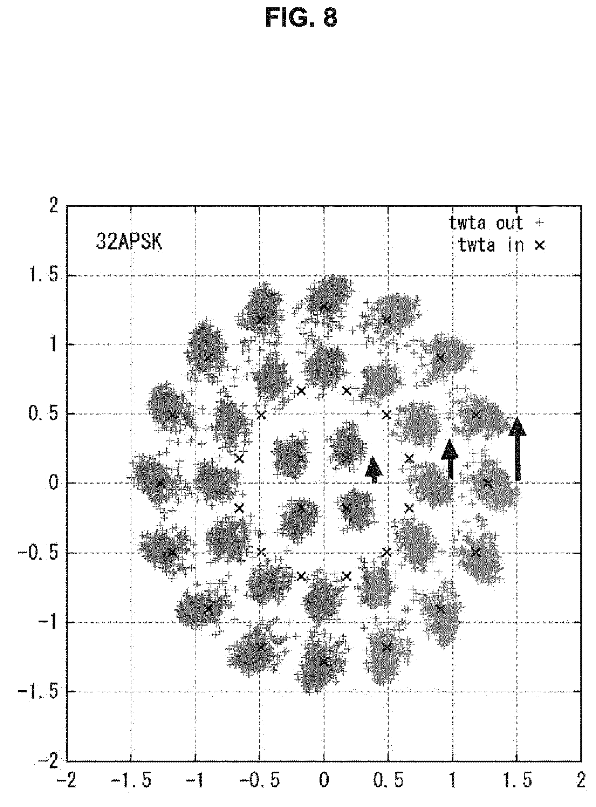

The relation between input signals and output signals of the TWTA 42 having the above characteristics which is obtained through simulation is shown in FIGS. 7 and 8. FIG. 7 is a diagram illustrating, as coordinate positions on the I-Q plane, transmission signal points and reception signal points of transmission signals that have been modulated using 8PSK. While the coordinates of the input signal points are indicated by × signs, the coordinates of the output signal points change as indicated by + signs as shown in FIG. 7. That is, the output signal points rotate counterclockwise with respect to the input signal points.

FIG. 8 is a diagram illustrating, as coordinate positions on the I-Q plane, transmission signal points and reception signal points of transmission signals that have been modulated using 32APSK. While the coordinates of the input signal points are indicated by × signs, the coordinates of the output signal points change as indicated by + signs as shown in FIG. 8. That is, the output signal points rotate counterclockwise with respect to the input signal points. The amount of the phase rotation differs according to respective distances from the center point, and the amount of phase rotation of a signal point at a longer distance from the center point is greater than that of a signal point at a shorter distance. Furthermore, respective distances from the center point have differing reduction rates. Specifically, as distances from the center point become longer, the reduction rates of the distances from the center point also become higher. In other words, as the distances from the center point become longer, the positions of the reception signal points are suppressed to be further inner side.

In order to compensate distortion of reception signal points based on such a nonlinear characteristic, the transmitting station transmits a transmission signal point arrangement signal, and the receiving station performs averaging of corresponding transmission signal points. That is, virtual reference transmission signal points are set on the coordinates that are obtained through the averaging of the transmission signal points as illustrated in C of FIG. 4. The transmission signal points set through the averaging are positioned substantially at the center of the actual transmission signal points. A demodulation process is performed based on these transmission signal points.

A reception device can perform demodulation or the like of a transmitted signal by specifying one of the 32 coordinate positions shown in A of FIG. 4 of a signal point of a symbol of the reception signal. However, since there is distortion in transmission paths which is caused by nonlinearity of an amplifier as described above, signal points of actually received reception signals are shown as in B of FIG. 4 or FIG. 8.

The signal points of actually received reception signals do not precisely coincide with the coordinate positions of the signal points of the transmission signals shown in A of FIG. 4, and the coordinate positions of the signal points are scattered as shown in B of FIG. 4.

In addition, as shown in B of FIG. 4 and FIG. 8, as distances from the center point become farther (as the amplitude increases), the scattered degrees of the signal points of the reception signals also become greater.

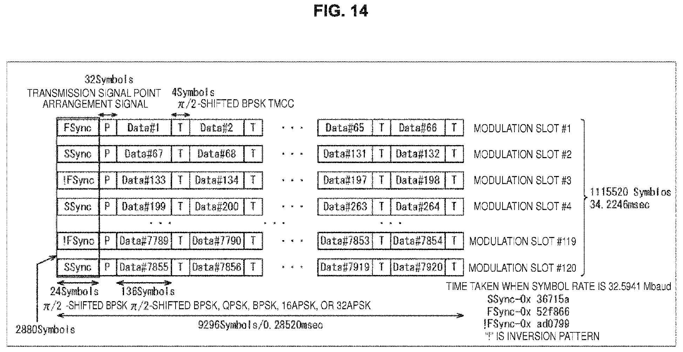

In order to specify to which of 32 kinds of symbols each signal point of the reception signal corresponds, in the frame of the advanced BS, transmission signal point arrangement signals indicated by Ps in FIG. 14 to be described below are each set to be arranged within modulation slots.

Since the transmission signal point arrangement signals are already known as described above, it is possible for the reception device to specify the coordinate positions of the 32 kinds of symbols even when there is distortion in transmission paths that is caused by nonlinearity of an amplifier. That is, since the reception device already knows to which of the 32 kinds of symbols each signal point of signals received as the transmission signal point arrangement signals corresponds, it is possible to specify how much the coordinate position of the signal point of each symbol is deviated.

The reception device of the advanced BS specifies the coordinate positions of the signal points which are, for example, the signal points of reception signals and correspond to each symbol of transmission signal point arrangement signals arranged in a plurality of modulation slots transmitted in the same transmission mode. For example, when 20 modulation slots in the transmission mode of the 32APSK modulation scheme are received, 20 transmission signal point arrangement signals can be received, and thus 20 signal points of a first symbol can be specified, 20 signal points of a second symbol can be specified, and likewise, 20 signal points of respective symbols up to a 32^{nd} symbol can be specified. Then, by averaging the coordinate positions of the signal points corresponding to each symbol, the reception device of the advanced BS specifies points serving as references of the coordinate positions of the 32 kinds of symbols.

As shown in C of FIG. 4, the coordinate positions of signal points indicating the same symbol are averaged, and points serving as references of the coordinate positions of the 32 kinds of symbols are specified.

Then, the reception device retains as information of the average of the coordinate positions of the 32 kinds of symbols specified as described above, and uses the information in hard decision and likelihood calculation of symbols.

By updating a likelihood table and a phase error table for synchronous reproduction to be used in decoding of LDPC codes based on signal points that are obtained in an averaging process of the transmission signal point arrangement signals, a C/N-BER characteristic and a cycle slip caused by nonlinearity can be suppressed. In addition, when signal point arrangement is changed, the reception device can recognize the change and perform reception corresponding to the changed signal point arrangement.

However, the averaging process takes time as described above. When a required averaging time in which a deterioration amount of a required C/N caused by insufficiency of averaging of the transmission signal point arrangement points is 0.1 dB or lower is obtained, the average number of frames is 44 (the required time is 1.52 seconds) in the case of the encoding rate of 97/120 (4/5) in 32APSK. Likewise, the average number of frames is 22 (the required time is 0.756 seconds) in the case of the encoding rate of 89/120 (3/4) in 16APSK, 11 (the required time is 0.378 seconds) in the case of the encoding rate of 89/120 (3/4) in 8PSK, and 6 (the required time is 0.206 seconds) in the case of the encoding rate of 61/120 (1/2) in QPSK. Further, the average number of frames is 3 (the required time is 0.103 seconds) in the case of the encoding rate of 61/120 (1/2) of the pi (the Greek letter)/2-shifted BPSK, and 6 (the required time is 0.206 seconds) in the case of the encoding rate of 33/120 in QPSK. Thus, the time in which a value is obtained with substantially sufficient accuracy is about 2 seconds in any case of averaging of the transmission signal point arrangement signals.

In other words, in the case of 32APSK, an averaging process in which symbols/sec is 32.5941M/9296 is required to be performed for 2 seconds. 64 (= 32x2) averaging circuits are necessary, accordingly the scale of circuits becomes greater, and thus costs of the reception device increase.

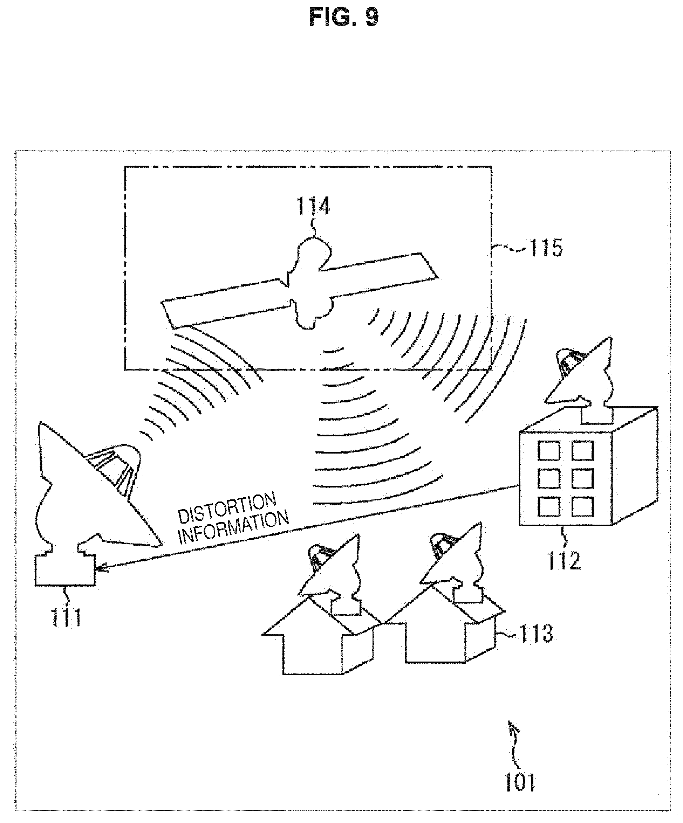

Therefore, in the first embodiment, a system as illustrated in FIG. 9 is employed.

### [Transmission and reception system]

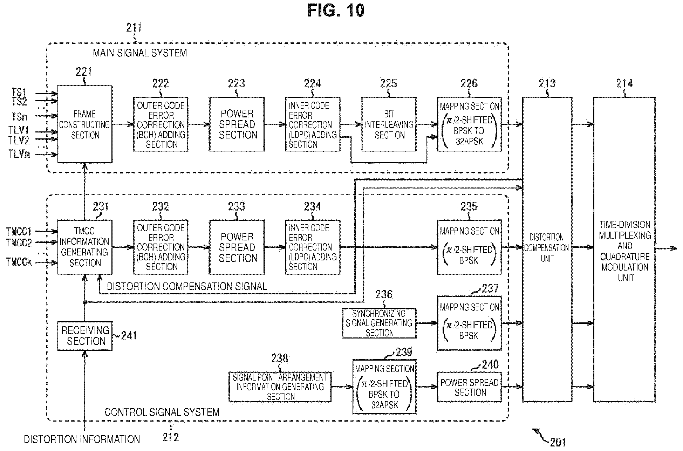

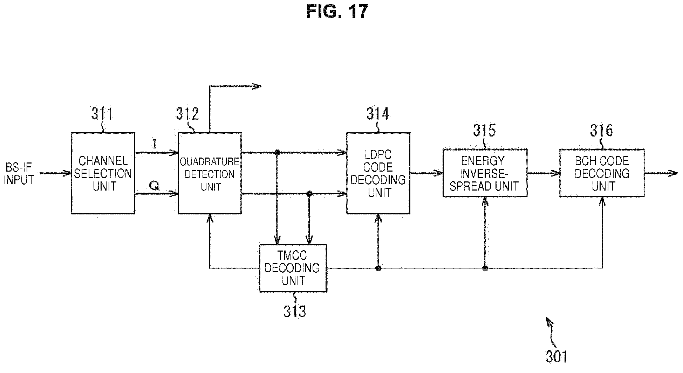

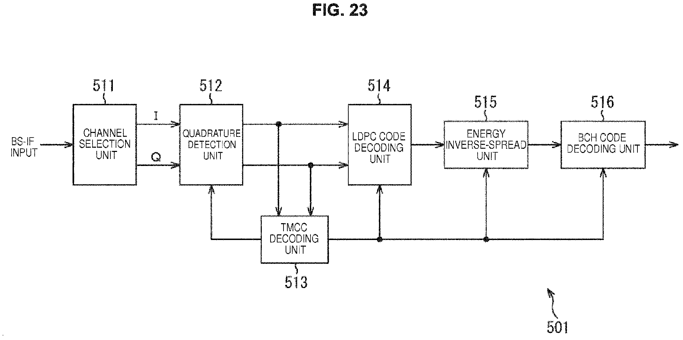

FIG. 9 is a diagram illustrating a configuration of an embodiment of a transmission and reception system 101 of the present technology. In the transmission and reception system 101, a transmission device 201 (see FIG. 10 to be described below) of a transmitting station 111 transmits transmission signals, and the transmission signals are relayed by a satellite 114 and then received by a reception device 501 (see FIG. 23 to be described below) in a residence 113 of a general user. In addition, the transmission signal relayed by the satellite 114 is received by a reference device 301 (see FIG. 17 to be described below) of a ground-based station 112.

The reference device 301 of the ground-based station 112 receives the transmission signal relayed by the satellite 114, detects distortion thereof, generates corresponding distortion information, and transmits the information to the transmission device 201 of the transmitting station 111. The transmission device 201 multiplexes the received distortion information into a transmission signal, and transmits the signal to the reception device 501 of the general residence 113 via the satellite 114. The reception device 501 compensates distortion of the received signal using the received distortion information.

Note that, although FIG. 9 illustrates that the ground-based station 112 is spaced apart from the transmitting station 111, the ground-based station 112 can also be disposed near the transmitting station 111. In other words, the reference device 301 may be disposed near the transmission device 201 (for example, within the transmitting station 111).

### [Transmission device]

FIG. 10 is a block diagram showing a configuration of an embodiment of the transmission device 201 of the present technology. The transmitting station 111 has the transmission device 201.

The transmission device 201 has a main signal system 211, a control signal system 212, a distortion compensation unit 213, and a time-division multiplexing and quadrature modulation unit 214.

The main signal system 211 has a frame constructing section 221, an outer code error correction adding section 222, a power spread section 223, an inner code error correction adding section 224, a bit interleaving section 225, and a mapping section 226.

The frame constructing section 221 receives inputs of MPEG-2TS and streams (TS1, TS2, ..., TSn, TLV1, TLV2, ..., TLVm) in the type-length-value (TLV) format as transmission signals. The frame constructing section 221 also receives supply of a Transmission and Multiplexing Configuration Control (TMCC) signal from a TMCC information generating section 231 of the control signal system 212. The frame constructing section 221 constructs a frame with the signals. The transmission signal and the TMCC information are processed in units of frames. The outer code error correction adding section 222 adds an error correction code that is an outer code (for example, a BCH code) to the signal supplied from the frame constructing section 221.

The power spread section 223 spreads a signal input from the outer code error correction adding section 222. Accordingly, only a specific frequency component increases, and an increase of a burden of a transmission system is suppressed. The bit interleaving section 225 performs bit interleaving when a modulation scheme is 8PSK, 16APSK, and 32APSK, and supplies the result to the mapping section 226. Signals of other modulation schemes are directly supplied to the mapping section 226 without undergoing bit interleaving. The mapping section 226 performs mapping according to any modulation scheme among the 5 types shown in FIG. 1 designated for each stream in the TMCC information.

The control signal system 212 has the TMCC information generating section 231, an outer code error correction adding section 232, a power spread section 233, an inner code error correction adding section 234, and a mapping section 235. Further, the control signal system 212 has a synchronizing signal generating section 236, a mapping section 237, a signal point arrangement information generating section 238, a mapping section 239, a power spread section 240, and a receiving section 241.

The TMCC information generating section 231 inputs transmission parameters (TMCC1, TMCC2, ..., TMCCk) of when each stream is transmitted, and generates TMCC information. When distortion compensation information is supplied by the distortion compensation unit 213, the TMCC information generating section 231 also adds the distortion compensation information to a TMCC signal.

The outer code error correction adding section 232 adds an error correction code that is an outer code (for example, a BCH code) to the TMCC information supplied from the TMCC information generating section 231.

The power spread section 223 spreads the signal input from the outer code error correction adding section 232. Accordingly, an increase of only a specific frequency component and an increase of a burden of the transmission system are suppressed. The mapping section 235 performs mapping on the TMCC information according to the modulation scheme of pi (the Greek letter)/2-shifted BPSK.

The synchronizing signal generating section 236 generates synchronizing signals (frame synchronizing signals and slot synchronizing signals). The mapping section 237 performs mapping on the synchronizing signals generated by the synchronizing signal generating section 236 according to the modulation scheme of pi (the Greek letter)/2-shifted BPSK.

The signal point arrangement information generating section 238 generates signal point arrangement information. The mapping section 239 performs mapping on the signal point arrangement information according to any modulation scheme among the 5 types shown in FIG. 1 designated to each stream in the TMCC information. The power spread section 240 spreads the signal point arrangement information.

The distortion compensation unit 213 executes distortion compensation of a signal output from the main signal system 211 and a signal output from the control signal system 212 based on the distortion information supplied from the receiving section 241. The distortion compensation unit 213 also supplies distortion compensation information that indicates the fact that distortion compensation has been executed to the TMCC information generating section 231 when the distortion compensation has been executed to cause the distortion compensation information to be added to the TMCC information. Note that, when distortion compensation is not executed (for example, in cases of the first embodiment and a second embodiment to be described below), the distortion compensation unit 213 can be omitted. However, distortion compensation can also be used in the first and second embodiments, and in that case, the distortion compensation unit 213 is not omitted.

The time-division multiplexing and quadrature modulation unit 214 performs time-division multiplexing and quadrature modulation on an information signal supplied from the main signal system 211 and the control signal system 212 through the distortion compensation unit 213 to generate modulated waves. Modulated signals thereof are transmitted to the reception device 501 via the satellite 114.

### [First transmission process]

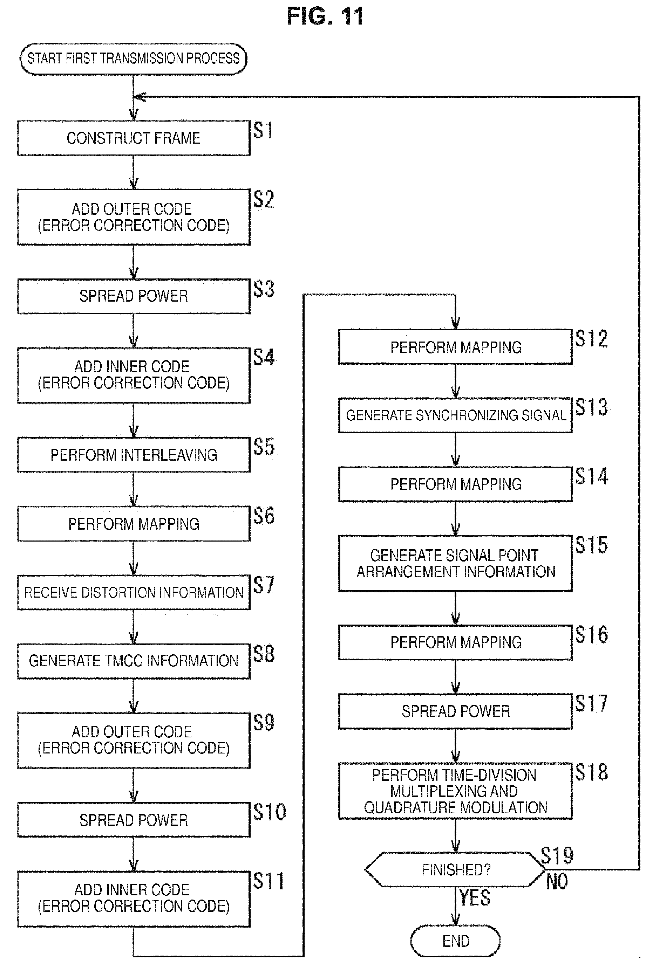

Next, a first transmission process of the transmission device 201 of FIG. 10 will be described with reference to FIG. 11. In the first embodiment in which this first transmission process is performed, the distortion compensation unit 213 can be omitted in the transmission device 201.

FIG. 11 is a flowchart describing the transmission process of the transmission device according to the first embodiment of the present technology. Note that, although operations of each unit and section are described in sequence in FIG. 11 for the sake of convenience, the operations of each unit and section can be executed in parallel or in a reverse order if necessary. The same applies also to operations of other flowcharts. The frame constructing section 221 constructs a frame with input signals of the TLV format and TS format in Step S 1.

The outer code error correction adding section 222 adds an error correction code that is an outer code including a BCH code to the signals constructing the frame in Step S2. The power spread section 223 spreads power of the signals to which the error correction code has been added in Step S3.

The inner code error correction adding section 224 adds an error correction code that is an inner code including an LDPC code to the signals of which power has spread in Step S4. The bit interleaving section 225 performs bit interleaving on a signal among the input signals of which the modulation scheme is 8PSK, 16APSK, or 32APSK in Step S5. Signals of other modulation schemes are not subjected to bit interleaving.

The mapping section 226 performs mapping on the signals supplied from the inner code error correction adding section 224 and the bit interleaving section 225 using a designed modulation scheme among the 5 types of modulation schemes in Step S6.

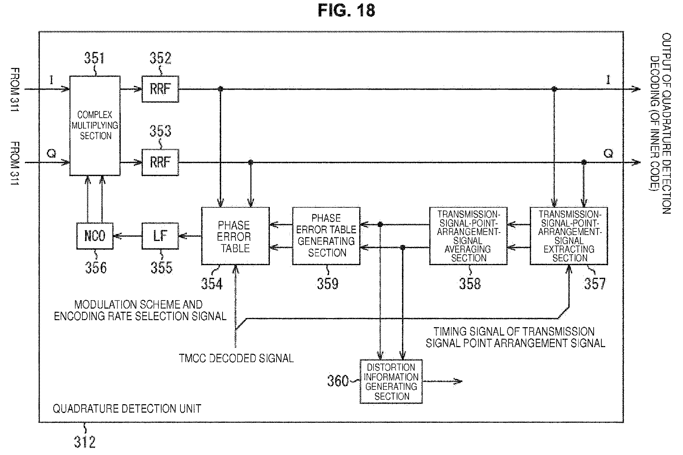

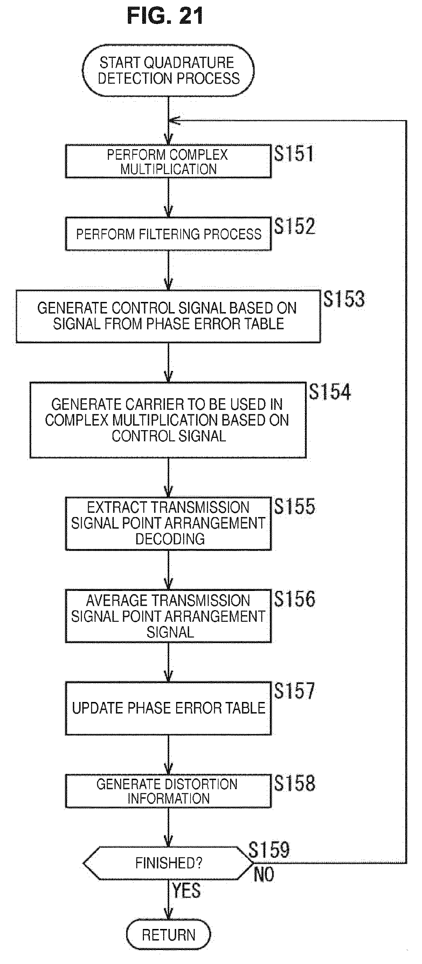

The receiving section 241 receives the distortion information in Step S7. This distortion information is generated in the process of Step S158 of FIG. 21 by a distortion information generating section 360 of a quadrature detection unit 312 shown in FIG. 18 of the reference device 301 of FIG. 17 to be described below, and transmitted. That is, this distortion information is information obtained as a result of an operation in which a signal that the transmission device 201 has already transmitted via the satellite 114 is received by the reference device 301 and distortion of the received signal is actually detected.

Note that it may be possible to measure distortion of the satellite 114 in advance and store information of the measured distortion in the receiving section 241. In addition, distortion information may be obtained by preparing and using a circuit having the same characteristics as the satellite 114.

As distortion information, the following information is considered.
(1) Absolute coordinate information of all transmission signal points after distortion (Cartesian coordinates and polar coordinates)
   In the case of 32APSK, for example, distortion information is absolute coordinate information of 32 transmission signal points. In this case, the amount of information is as follows.
   Cartesian coordinates: 32 signal pointsx(I, Q)×the number of quantization bits
   Polar coordinates: 32 signal points×(radius, angle)×the number of quantization bits
   Thus, the amount of information is 768 bits when the number of quantization bits is 12, and 640 bits when the number of quantization bits is 10.
(2) Absolute coordinate information of some transmission signal points after distortion (Cartesian coordinates and polar coordinates) One point is selected from each of transmission signal point groups positioned equidistantly from the center point (origin). In other words, absolute coordinates of the representative symbol of each circumference are set as distortion information. For example, in the case of 32APSK, the amount of information is as follows.
   Cartesian coordinates: 3 signal pointsx(I, Q)×the number of quantization bits
   Polar coordinates: 3 signal points×(radius, angle)×the number of quantization bits
   Thus, the amount of information is 72 bits when the number of quantization bits is 12, and 60 bits when the number of quantization bits is 10. The amount of information can be reduced more than the absolute coordinate information of all transmission signal points.
(3) Relative coordinate information of all other transmission signal points with respect to transmission signal points which serve as a reference after distortion (Cartesian coordinates and polar coordinates)
   In the case of 32APSK, for example, with one transmission signal point as a reference, distortion information is relative coordinate information of 31 transmission signal points other than the reference point. In this case, the amount of information can also be reduced more than the absolute coordinate information of all transmission signal points.
(4) Relative coordinate information of some other transmission signal points with respect to transmission signal points which serve as a reference after distortion (Cartesian coordinates and polar coordinates)
   One point is selected from each of transmission signal point groups positioned equidistantly from the center point (origin). In other words, relative coordinates of the representative symbol of each circumference are set as distortion information. In this case, the amount of information can also be reduced more than the relative coordinate information of all transmission signal points.
(5) Data of a graph with respect to input and output characteristics of a transmission path
   Distortion information is expressed by data indicating a characteristic curve that indicates the relation between the amplitude of the input signal and the amplitude of the output signal and data indicating a characteristic curve that indicates the relation between the amplitude of the input signal and the phase of the output signal of FIG. 6.
(6) Relative coordinates of a reception signal point that has been affected by distortion of a transmission signal point
   Distortion information is expressed by a vector (difference) of a transmission signal point having a reception signal point of all symbols or the representative symbol as a reference. Thereby, the number of quantization bits can be reduced.
(7) Reduction ratio (magnification ratio) of a radius with respect to a center point (origin) and a rotation angle
   In the case of 32APSK, for example, distortion information is expressed by a magnification ratio of each radius of 3 circles of corresponding transmission signal points to each radius of 3 circles of reception signal points and a rotation angle of a reception signal point with respect to a corresponding transmission signal point. Also in this case, distortion information of all symbols or the representative symbol is considered.

As will be described below, the present technology can also be applied to various standards beginning from Digital Video Broadcasting (DVB) that is a European standard. For DVB, for example, a part of coordinate information of (2) or (4) among the above-described 4 types of distortion information may be applied.

In Step S8, the TMCC information generating section 231 generates TMCC information based on the transmission parameters (TMCC1, TMCC2, ..., TMCCk) of when each input stream is transmitted.

### [Configuration of TMCC information]

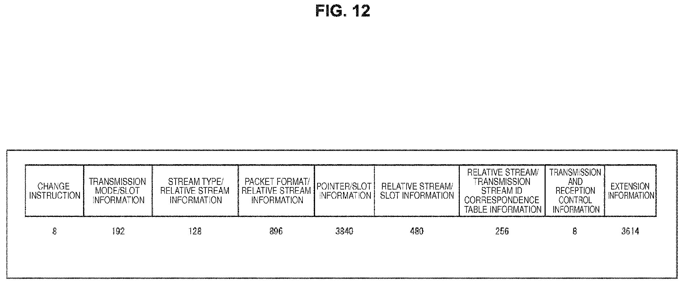

Herein, a configuration of TMCC information will be described. FIG. 12 is a diagram for describing the configuration of TMCC information. The TMCC information includes a change instruction (8 bits), transmission mode/slot information (192 bits), stream type/relative stream information (128 bits), packet format/relative stream information (896 bits), and pointer/slot information (3840 bits). In addition, the TMCC information includes relative stream/slot information (480 bits), relative stream/transmission stream ID correspondence table information (256 bits), transmission and reception control information (8 bits), and extension information (3614 bits). The TMCC information is configured with a total of 9422 bits as above. A minimum updating interval of the TMCC information is one frame.

One is added to the change instruction each time there is a change in the content of the TMCC information, and when the value thereof is '11111111,' it returns to '00000000.' When only the pointer/slot information is changed, however, addition to the change instruction is not performed.

The transmission mode/slot information indicates the modulation scheme of a transmission main signal, an encoding rate of an error correction inner coding, backoff of an output of a satellite, and the number of allocated slots.

The stream type/relative stream information is a section indicating the correspondence between relative stream numbers and stream types, and indicates the type of each packet stream for each relative stream number allocated to each slot indicated in the field of the relative stream/slot information.

The packet format/relative stream information indicates the correspondence between relative stream numbers and packet formats, and indicates a packet format for each relative stream number allocated to each slot in the relative stream/slot information.

The pointer/slot information indicates the leading position of the first packet and the tailing position of the last packet included in each slot.

The relative stream/slot information indicates the correspondence between slots and relative stream numbers, indicating the relative stream numbers transmitted in respective slots in order from Slot 1.

The relative stream/transmission stream ID correspondence table indicates the correspondence between the relative stream numbers used in the relative stream/slot information and transmission stream IDs (a transport stream identifier (TS_ID) of MPEG-2 Systems when the stream type is MPEG-2TS, and a TLV stream identifier (TLV stream ID) when the type is the TVL format).

The transmission and reception control information transmits a signal for receiver activation control and uplink control information in emergency warning broadcasting.

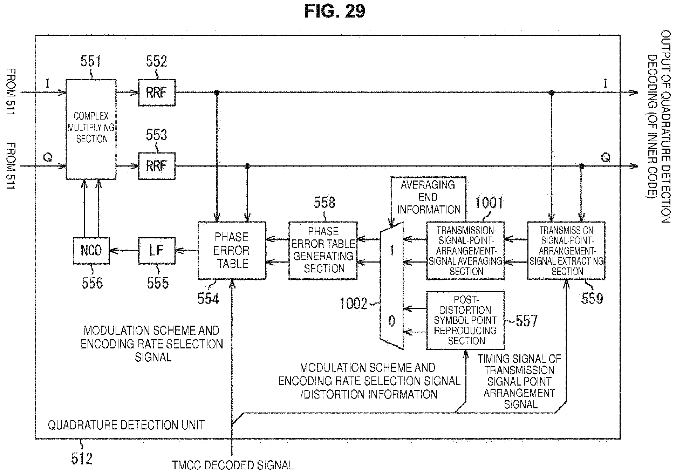

The extension information is a field that was used for extension of TMCC information in the past, but in the first embodiment, distortion information is inserted therein. In the second embodiment of FIG. 29 in which distortion compensation is performed that will be described below, distortion compensation information is inserted therein.

Returning to FIG. 11, the outer code error correction adding section 232 adds an error correction code of an outer code including a BCH code to the TMCC information generated by the TMCC information generating section 231 in Step S9. The power spread section 233 spreads power of the signal to which the error correction code has been added in Step S10.

In Step S11, the inner code error correction adding section 234 adds an error correction code of an inner code including an LDPC code to the signal of which power has been spread.

In Step S12, the mapping section 235 performs mapping on the signal supplied from the inner code error correction adding section 234 using the modulation scheme of pi (the Greek letter)/2-shifted BPSK.

### [Configuration procedure of TMCC information]

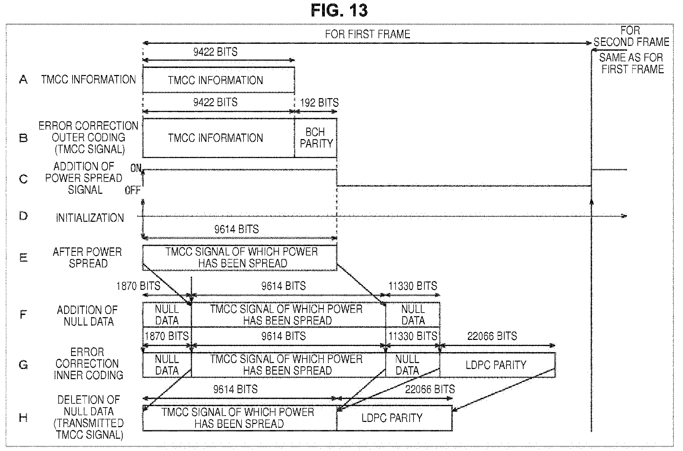

Herein, a configuration procedure of TMCC information will be described. FIG. 13 is a diagram for describing the procedure of configuring the TMCC information.

In one frame, a 192-bit BCH parity (B of FIG. 13) is added to 9422-bit TMCC information (A of FIG. 13). A power spread signal is added to the information (C of FIG. 13), 1870-bit null data (data having all values of 0) is added the head of the TMCC information of which power has been spread (E of FIG. 13), and 11330-bit null data is added to the end of the TMCC information (F of FIG. 13).

Further, a 22066-bit LDPC parity is added to the TMCC information (G of FIG. 13) to which the null data has been added. Then, the null data is deleted, and transmission TMCC information is generated (H of FIG. 13).

Returning to FIG. 11, the synchronizing signal generating section 236 generates synchronizing signals in Step S13. The mapping section 237 performs mapping on the synchronizing signals using the modulation scheme of pi (the Greek letter)/2-shifted BPSK in Step S 14.

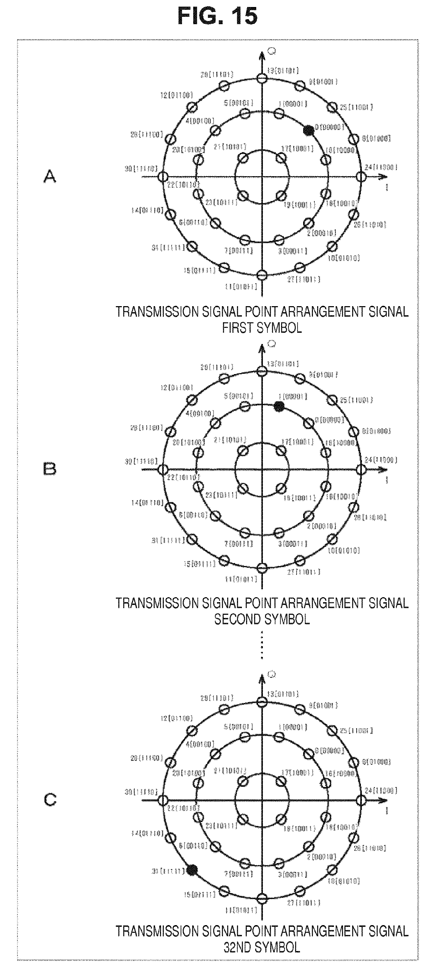

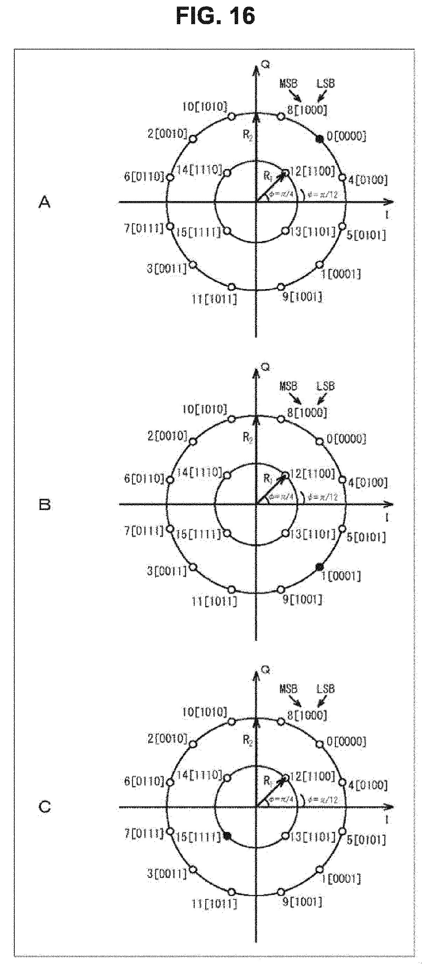

In Step S15, the signal point arrangement information generating section 238 generates signal point arrangement information. This signal point arrangement information will be described below with reference to FIGS. 15 and 16. In Step S16, the mapping section 239 performs mapping on the signal point arrangement information using a designated modulation scheme among the 5 types of modulation schemes. In Step S17, the power spread section 240 spreads power of the mapped signal point arrangement information.

Note that, although the processes of the main information signal in the main signal system 211 of Steps S1 to S6 and the processes of the control signal of the control signal system 212 of Steps S7 to S17 are described in a time-series manner for convenience, they may be performed in parallel in practice.

In Step S18, the time-division multiplexing and quadrature modulation unit 214 performs time-division multiplexing and quadrature modulation on the information signals input from the main signal system 211 and the control signal system 212 and transmits the result.

The above processes are repeated until an instruction of an end is determined in Step S19.

### [Configuration of a frame]

Herein, a configuration of a frame will be described.

FIG. 14 is a diagram for describing a configuration of a frame of the advance BS. As shown in the drawing, one frame is constituted by 120 modulation slots, and in this example, the modulation slots are denoted by modulation slot #1 to modulation slot #120.

In each modulation slot, 24 symbols for synchronization (denoted by FSync, !FSync, and SSync in FIG. 14) are provided. In addition, 32 symbols used for determination of positions of signal points and the like (which are referred to as transmission signal point arrangement information; denoted by P in FIG. 14) are provided. These symbols are known symbols, and the sequence represented by the 24 symbols for synchronization and the sequence represented by the 32 symbols used for determination of positions of signal points and the like are stipulated according to a standard.

FIG. 15 is a diagram for describing transmission signal point arrangement information. In FIG. 15, among 32 symbols of the transmission signal point arrangement information in the case of 32APSK, a first symbol (A of FIG. 15), a second symbol (B of FIG. 15), and a 32^{nd} symbol (C of FIG. 15) are shown. The first symbol is a symbol with a value of 0 (00000), the second symbol is a symbol with a value of 1 (00001), and the 32^{nd} symbol is a symbol with a value of 31 (11111).

FIG. 16 is a diagram for describing transmission signal point arrangement information. In FIG. 16, among 16 symbols of the transmission signal point arrangement information in the case of 16APSK, a first symbol (A of FIG. 16), a second symbol (B of FIG. 16), and a 32^{nd} symbol (C of FIG. 16) are shown. The first symbol is a symbol with a value of 0 (0000), the second symbol is a symbol with a value of 1 (0001), and the 16^{th} symbol is a symbol with a value of 15 (1111).

The 24 symbols for synchronization described above are also referred to as synchronizing signals, and it is stipulated in the standard that the symbol of FSync is arranged in the head modulation slot constituting the frame and the symbol of SSync is arranged in the second modulation slot. Further, it is stipulated in the standard that the symbols of !FSync, which is the inversion symbol of FSync, and SSync are each arranged in the third and following slots in an alternating manner.

Since each SSync is regularly arranged in every other modulation slot, it is generally assumed to be used for detecting the head of the modulation slots. In addition, since the inversion symbol of FSync is arranged in a slot other than the head slot of a frame, it is generally assumed to be used for detecting the head of a frame by finding the code of its correlation value.

In addition, each modulation slot includes 66 pieces of transmission data each composed of 136 symbols. For example, pieces of transmission data in a modulation slot #1 are denoted by Data #1 to Data #66, and pieces of transmission data in a modulation slot #2 are denoted by Data #67 to Data #132. Note that each of 66 pieces of transmission data composed of 136 symbols included in each modulation slot is also referred to as a transmission main signal.

Furthermore, TMCC information which is control information with regard to transmission and multiplexing and is composed of 4 symbols is inserted between pieces of transmission data in each modulation slot. In the drawing, T indicates TMCC information.

One frame of the advanced BS of FIG. 14 configured as above includes a total of 1,115,520 symbols.

In addition, a plurality of modulation schemes can be mixed in one frame in the advanced BS. For example, a maximum of 8 transmission modes can be defined in one frame, and different modulation schemes can be employed in the respective transmission modes. In the advanced BS, the 5 types of modulation schemes including BPSK, QPSK, 8PSK, 16APSK, and 32APSK can be used as shown in FIG. 1.

In the advanced BS, it is possible to define a transmission mode for each modulation slot and modulate a transmission main signal using any of the 5 types of modulation schemes. At this time, it is stipulated that a transmission signal point arrangement signal be modulated using the same modulation scheme as that of a transmission main signal.

A transmission mode of each modulation slot is set to be specified by analyzing TMCC of the frame positioned two frames ahead of the frame of the slot. Thus, the reception device is set to specify a modulation scheme of each modulation slot of a received frame by acquiring and storing all TMCC inserted into each modulation slot of a frame received two frames ahead.

Note that, regardless of a transmission mode of each modulation slot, the 24 symbols for synchronization (synchronizing signals) are set to be modulated using pi (the Greek letter)/2BPSK at all times. In addition, regardless of a transmission mode of each modulation slot, TMCC is set to be modulated using pi (the Greek letter)/2BPSK at all times.

When the APSK modulation scheme is employed, however, nonlinearity of an amplifier has a greater influence than when the PSK modulation scheme is employed. That is, since APSK has a greater dynamic range in variation of amplitude than PSK, an influence of distortion of a transmission path caused by nonlinearity of a transmission amplifier or a reception amplifier is profound.

### [Reference device]

Next, the reference device 301 will be described. FIG. 17 is a block diagram illustrating a configuration of an embodiment of the reference device of the present technology. The reference device 301 has a channel selection unit 311, a quadrature detection unit 312, a TMCC decoding unit 313, an LDPC code decoding unit 314, an energy inverse-spread unit 315, and a BCH code decoding unit 316.

The channel selection unit 311 selects a signal of a designated channel from a BS-IF signal obtained by receiving a signal transmitted from the transmission device 201. The quadrature detection unit 312 detects an I signal and a Q signal from the signal of the channel selected by the channel selection unit 311. The TMCC decoding unit 313 decodes TMCC information from the I and Q signals output from the quadrature detection unit 312 and outputs the decoding result to each unit.

The LDPC code decoding unit 314 decodes an LDPC code using the I and Q signals output from the quadrature detection unit 312 based on the decoded TMCC information, and outputs the decoded signal. The energy inverse-spread unit 315 inversely spreads energy of the decoded signal obtained from the LDPC code decoding unit 314 based on the decoded TMCC information. The BCH code decoding unit 316 decodes a BCH code from the signal of which energy has been inversely spread based on the decoded TMCC information and outputs the decoded signal.

FIG. 18 is a block diagram illustrating a configuration of an embodiment of the quadrature detection unit of the reference device of the present technology. In other words, FIG. 18 is a block diagram illustrating a detailed configuration of the quadrature detection unit 312 of FIG. 17.

The quadrature detection unit 312 includes a complex multiplying section 351, route roll-off filters (RRFs) 352 and 353, a phase error table 354, a loop filter (LF) 355, a numerically controlled oscillator (NCO) 356, a transmission-signal-point-arrangement-signal extracting section 357, a transmission-signal-point-arrangement-signal averaging section 358, a phase error table generating section 359, and a distortion information generating section 360.

The complex multiplying section 351 performs complex multiplication on the I and Q signals input from the channel selection unit 311 of FIG. 17. Among the outputs of the section, the I signal is filtered by the RRF 352 and the Q signal is filtered by the RRF 353, and they are supplied to the phase error table 354. The phase error table 354 has received supply of a modulation scheme and encoding rate selection signal included in a demodulated TMCC signal. The LF 355 filters the signals read from the phase error table 354 and supplies the signals to the NCO 356.

The transmission-signal-point-arrangement-signal extracting section 357 extracts transmission signal point arrangement signals from the outputs of the RRFs 352 and 353. The transmission-signal-point-arrangement-signal extracting section 357 has received supply of a timing signal of the transmission signal point arrangement signals included in the demodulated TMCC signal. The transmission-signal-point-arrangement-signal averaging section 358 averages the extracted transmission signal point arrangement signals. The phase error table generating section 359 creates a phase error table based on the averaged transmission signal point arrangement signals. The distortion information generating section 360 generates distortion information based on the averaged transmission signal point arrangement signals. This distortion information is supplied to the transmission device 201.

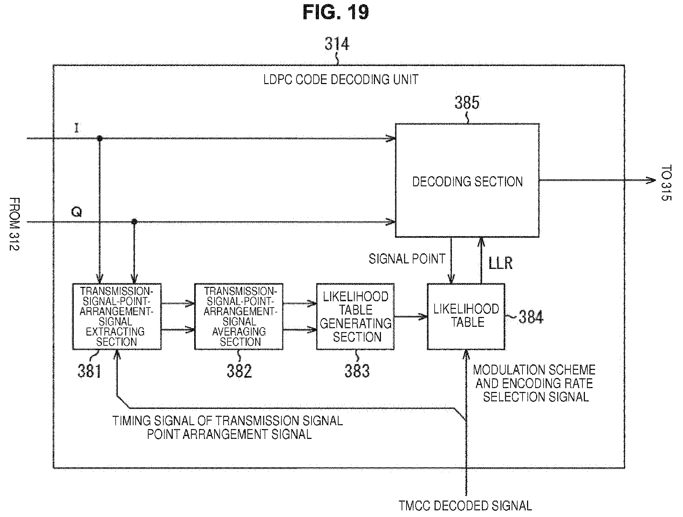

FIG. 19 is a block diagram illustrating a configuration of an embodiment of the LDPC code decoding unit of the reference device of the present technology. In other words, FIG. 19 is a block diagram illustrating a detailed configuration of the LDPC code decoding unit 314 of FIG. 17.

The LDPC code decoding unit 314 includes a transmission-signal-point-arrangement-signal extracting section 381, a transmission-signal-point-arrangement-signal averaging section 382, a likelihood table generating section 383, a likelihood table 384, and a decoding section 385.

The transmission-signal-point-arrangement-signal extracting section 381 extracts transmission signal point arrangement signals from the output of the quadrature detection unit 312 of FIGS. 17 and 18. The transmission-signal-point-arrangement-signal extracting section 381 has received supply of a timing signal of the transmission signal point arrangement signals included in the demodulated TMCC signal. The transmission-signal-point-arrangement-signal averaging section 382 averages the extracted transmission signal point arrangement signals.

With the averaged transmission signal point arrangement signals as ideal signal points, the likelihood table generating section 383 computes a log likelihood ratio (LLR) of each bit constituting a binary sequence mapped with each signal point and thereby generates a likelihood table. The generated likelihood table is written in the likelihood table 384. The likelihood table 384 has received supply of the modulation scheme and encoding rate selection signal included in the demodulated TMCC signal. The decoding section 385 decodes the LDPC code from the output of the quadrature detection unit 312 using the likelihood table 384, and outputs the decoded signal.

### [Reference process]

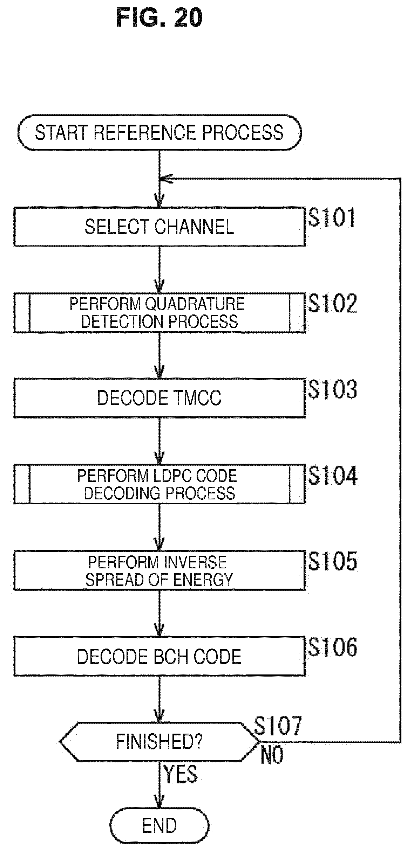

Next, a reference process executed by the reference device 301 of FIG. 17 will be described with reference to FIG. 20.

In Step S101, the channel selection unit 311 selects a channel of a signal to be received based on an instruction of a user. In Step S102, the quadrature detection unit 312 executes a quadrature detection process. Details thereof will be described below with reference to FIG. 21.

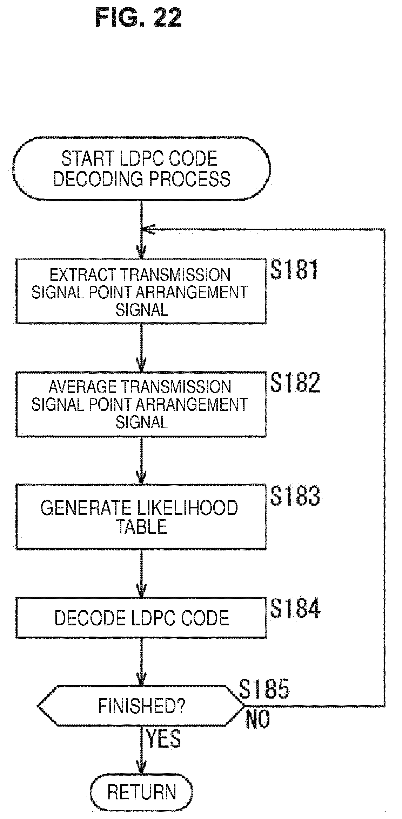

In Step S103, the TMCC decoding unit 313 decodes TMCC from the I and Q signals output by the quadrature detection unit 312, and outputs the decoded result to each unit. In Step S104, the LDPC code decoding unit 314 executes an LDPC code decoding process. The process will be described in detail with reference to FIG. 22.

In Step S105, the energy inverse-spread unit 315 performs energy inverse spread of the signal output from the LDPC code decoding unit 314. This process is an inverse process to the spread processes by the power spread sections 223, 233, and 240 of the transmission device 201 of FIG. 10.

In Step S106, the BCH code decoding unit 316 decodes a BCH code from the signal which has been inversely spread and outputs the decoded signal.

The above processes are repeated until an end of the processes is determined to have been instructed in Step S107.

Next, details of the quadrature detection process of Step S102 of FIG. 20 will be described with reference to FIG. 21. FIG. 21 is a flowchart describing the quadrature detection process of the quadrature detection unit of the reference device of the present technology. In other words, it is a process executed by the quadrature detection unit 312 of FIGS. 17 and 18 in Step S102.

In Step S151, the complex multiplying section 151 executes a complex multiplication process. In Step S152, the RRFs 352 and 353 filter the I and Q signals output by the complex multiplying section 151. In Step S153, the LF 355 generates a control signal based on a signal from the phase error table. In Step S154, the NCO 356 generates a carrier signal to be used in complex multiplication based on the control signal generated by the LF 355.

The PLL process of the complex multiplying section 351, the RRFs 352 and 353, the phase error table 354, the LF 355, and the NCO 356 functions to stop rotation of a phase of a reception signal.

In Step S155, the transmission-signal-point-arrangement-signal extracting section 357 extracts transmission signal point arrangement signals from the output of the RRFs 352 and 353. In Step S156, the transmission-signal-point-arrangement-signal averaging section 358 averages the extracted transmission signal point arrangement signals. In Step S157, the phase error table generating section 359 updates the phase error table based on the averaged transmission signal point arrangement signals. The processes of Steps S151 to S154 described above are repeated based on the updated phase error table.

In Step S158, the distortion information generating section 360 generates distortion information based on the averaged transmission signal point arrangement signals. As described above, this distortion information is transmitted to the transmission device 201 of FIG. 10, and received by the receiving section 241 thereof. Then, the distortion information is transmitted to each reception device 501 as extension information of TMCC information of FIG. 12.

The processes above are repeated until an end thereof is determined to have been instructed in Step S159. Note that the reference process may be performed at all times, or performed at predetermined time points with a predetermined time interval.

Next, details of the LDPC code decoding process of Step S104 of FIG. 20 will be described with reference to FIG. 22. FIG. 22 is a flowchart describing the LDPC code decoding process of the LDPC code decoding unit of the reference device of the present technology. In other words, it is a process executed by the LDPC code decoding unit 314 of FIGS. 17 and 19 in Step S104.

In Step S181, the transmission-signal-point-arrangement-signal extracting section 381 extracts transmission signal point arrangement signals from the I and Q signals supplied by the quadrature detection unit 312. In Step S182, the transmission-signal-point-arrangement-signal averaging section 382 averages the extracted transmission signal point arrangement signals. In Step S183, the likelihood table generating section 383 generates a likelihood table and writes the table in the likelihood table 384.

In Step S184, the decoding section 385 decodes an LDPC code from the I and Q signals supplied by the quadrature detection unit 312 based on the likelihood table 384, and supplies the decoded signal to the energy inverse-spread unit 315 of FIG. 17.

The above processes are repeated until an end of the processes is determined to have been instructed in Step S185.

### [Reception device]

Next, the reception device 501 will be described. FIG. 23 is a block diagram illustrating a configuration of the reception device according to the first embodiment the present technology. In other words, FIG. 23 shows a configuration of a device that receives signals transmitted from the transmission device 201 via the satellite 114 in, for example, a general residence 113 (in FIG. 9).

The reception device 501 has a channel selection unit 511, a quadrature detection unit 512, a TMCC decoding unit 513, an LDPC code decoding unit 514, an energy inverse-spread unit 515, and a BCH code decoding unit 516.

The channel selection unit 511 selects a signal of a designated channel from a BS-IF signal obtained by receiving a signal transmitted from the transmission device 201. The quadrature detection unit 512 detects an I signal and a Q signal from the signal of the channel selected by the channel selection unit 511. The TMCC decoding unit 513 decodes TMCC information from the I and Q signals output from the quadrature detection unit 512 and outputs the decoding result to each unit.

The LDPC code decoding unit 514 decodes an LDPC code using the I and Q signals output from the quadrature detection unit 512 based on the decoded TMCC information, and outputs the decoded signal. The energy inverse-spread unit 515 inversely spreads energy of the decoded signal obtained from the LDPC code decoding unit 514 based on the decoded TMCC information. The BCH code decoding unit 516 decodes a BCH code from the signal of which energy has been inversely spread based on the decoded TMCC information and outputs the decoded signal.

As described above, the configuration of the reception device 501 is basically the same as the configuration of the reference device 301 shown in FIG. 17.

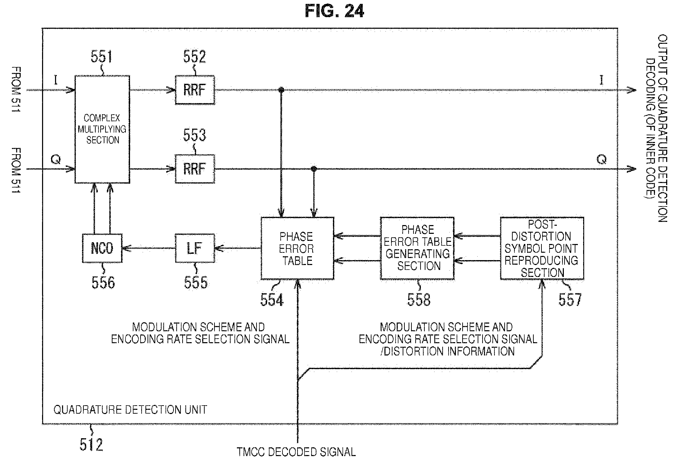

FIG. 24 is a block diagram illustrating a configuration of the quadrature detection unit of the reception device according to the first embodiment of the present technology. In other words, FIG. 24 is a block diagram illustrating a detailed configuration of the quadrature detection unit 512 of FIG. 23.

The quadrature detection unit 512 includes a complex multiplying section 551, RRFs 552 and 553, a phase error table 554, an LF 555, an NCO 556, a post-distortion symbol point reproducing section 557, and a phase error table generating section 558.

As is obvious from comparison of FIG. 24 to FIG. 18, unlike the quadrature detection unit 312 of FIG. 18, the transmission-signal-point-arrangement-signal extracting section 357, the transmission-signal-point-arrangement-signal averaging section 358, and the distortion information generating section 360 are omitted in the quadrature detection unit 512 of FIG. 24. Instead, the quadrature detection unit 512 of FIG. 24 is provided with the post-distortion symbol point reproducing section 557.

The complex multiplying section 551 performs complex multiplication and quadrature detection on the I and Q signals input from the channel selection unit 511 of FIG. 23. Among the signals, the I signal is filtered by the RRF 552 and the Q signal is filtered by the RRF 553, and the signals are supplied to the phase error table 554. The phase error table 554 has received supply of a modulation scheme and encoding rate selection signal included in the demodulated TMCC signal. The LF 555 filters the signals read from the phase error table 554, and supplies the signals to the NCO 556.

The post-distortion symbol point reproducing section 557 reproduces post-distortion symbol points based on distortion information included in the decoded TMCC information. The distortion information is generated based on the averaged transmission signal point arrangement signals, and based on this distortion information, substantially the same signals as the averaged transmission signal point arrangement signals are generated. In other words, the post-distortion symbol point reproducing section 557 generates signals that offset the distortion.

The phase error table generating section 558 creates a phase error table based on substantially the same post-distortion symbol point information as the transmission signal point arrangement signals. A demodulation process is performed based on information of the phase error table 554 generated by the phase error table generating section 558. Accordingly, accurate demodulation is possible even when distortion is present in reception signal points. Thus, the phase error table generating section 558 and the phase error table 554 compensate distortion of reception signal points.

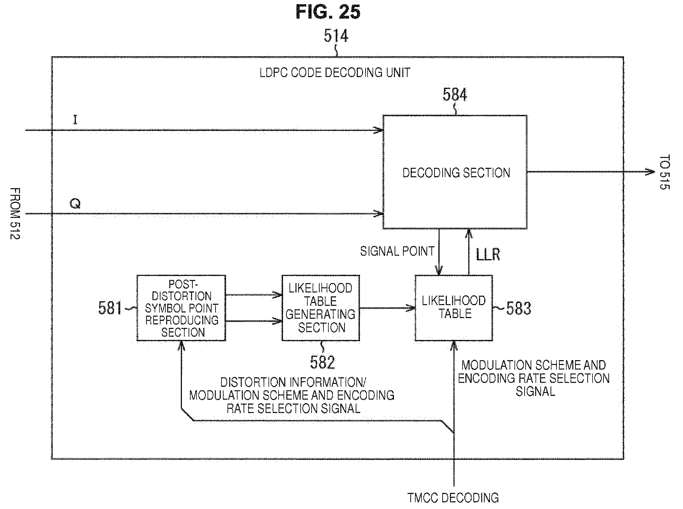

FIG. 25 is a block diagram illustrating a configuration of the LDPC code decoding unit of the reception device according to the first embodiment of the present technology. In other words, FIG. 25 is a block diagram illustrating a detailed configuration of the LDPC code decoding unit 514 of FIG. 23.

The LDPC code decoding unit 514 includes a post-distortion symbol point reproducing section 581, a likelihood table generating section 582, a likelihood table 583, and a decoding section 584.

The post-distortion symbol point reproducing section 581 reproduces post-distortion symbol points based on distortion information included in the decoded TMCC information. The distortion information is generated based on the averaged transmission signal point arrangement signals, and based on this distortion information, substantially the same signals as the averaged transmission signal point arrangement signals are generated. In other words, the post-distortion symbol point reproducing section 581 generates signals that offset the distortion.

With substantially the same post-distortion symbol points as the averaged transmission signal point arrangement signals as ideal signal points, the likelihood table generating section 582 computes a log likelihood ratio (LLR) of each bit constituting a binary sequence mapped with each signal point and thereby generates a likelihood table. The generated likelihood table is written in the likelihood table 582. The likelihood table 583 which enables accurate decoding even when distortion is present in reception signal point is generated accordingly. Therefore, the likelihood table generating section 582 and the likelihood table 583 compensate distortion of reception signal points. The likelihood table 583 has received supply of the modulation scheme and encoding rate selection signal included in the demodulated TMCC signal. The decoding section 584 decodes the LDPC code from the output of the quadrature detection unit 512 using the likelihood table 583, and outputs the decoded signal.

As is obvious from comparison of FIG. 25 to FIG. 19, unlike the LDPC code decoding unit 314 of FIG. 19, the transmission-signal-point-arrangement-signal extracting section 381 and the transmission-signal-point-arrangement-signal averaging section 382 are omitted in the LDPC code decoding unit 514 of FIG. 25. Instead, the LDPC code decoding unit 514 of FIG. 25 is provided with the post-distortion symbol point reproducing section 581.

### [Reception device]

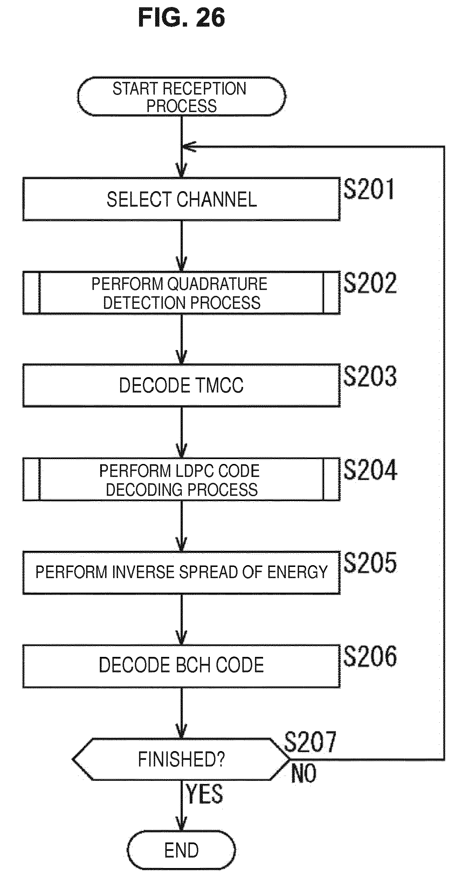

Next, a reception process executed by the reception device 501 of FIG. 23 will be described with reference to FIG. 26. FIG. 26 is a flowchart describing the reception process of the reception device of the present technology.

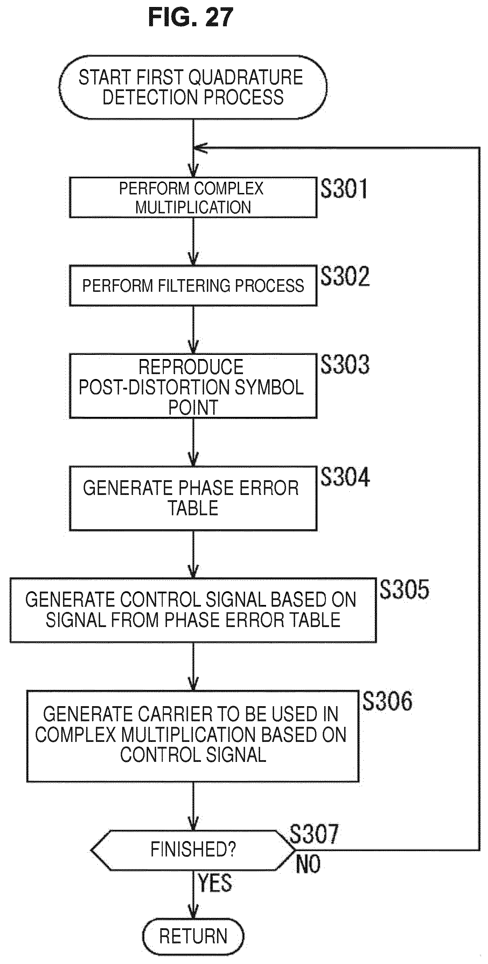

In Step S201, the channel selection unit 511 selects a channel of a signal to be received based on an instruction of a user. In Step S202, the quadrature detection unit 512 executes a quadrature detection process. Details thereof will be described below with reference to FIG. 27.

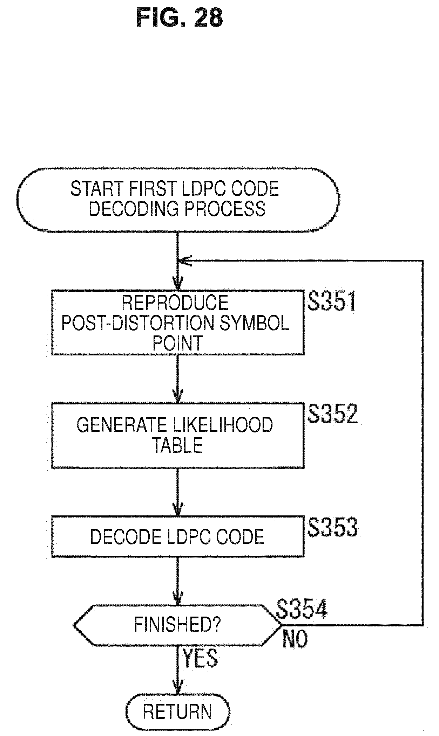

In Step S203, the TMCC decoding unit 513 decodes TMCC from the I and Q signals output by the quadrature detection unit 512, and outputs the decoded result to each unit. In Step S204, the LDPC code decoding unit 514 executes an LDPC code decoding process. The process will be described in detail with reference to FIG. 28.

In Step S205, the energy inverse-spread unit 515 performs energy inverse spread of the signal output from the LDPC code decoding unit 514. This process is an inverse process to the spread processes by the power spread sections 223, 233, and 240 of the transmission device 201 of FIG. 10.

In Step S206, the BCH code decoding unit 516 decodes a BCH code from the signal which has been inversely spread and outputs the decoded signal.

The above processes are repeated until an end of the processes is determined to have been instructed in Step S207.

As described above, the reception process of FIG. 26 is basically the same process as the reference process of FIG. 20.

Next, details of the quadrature detection process of Step S202 of FIG. 26 will be described with reference to FIG. 27. FIG. 27 is a flowchart describing the quadrature detection process of the quadrature detection unit of the reception device according to the first embodiment of the present technology. In other words, it is the process executed by the quadrature detection unit 512 of FIGS. 23 and 24 in Step S202.

In Step S301, the complex multiplying section 551 executes a complex multiplication process, i.e., a quadrature detection process. In Step S302, the RRFs 552 and 553 filter the I and Q signals output by the complex multiplying section 551.

In Step S303, the post-distortion symbol point reproducing section 557 reproduces post-distortion symbol points based on distortion information in the decoded TMCC information. The distortion information is generated based on the averaged transmission signal point arrangement signals, and based on this distortion information, substantially the same post-distortion symbol point information as the averaged transmission signal point arrangement signals is generated. In other words, the post-distortion symbol point reproducing section 557 generates signals that offset distortion. Note that, in FIG. 23 in which a TMCC decoding process is necessary before quadrature detection, the TMCC signal is set to be decoded from the signals that have undergone quadrature detection in order to obtain TMCC information, and thus, in FIG. 26, the TMCC decoding process of Step S203 is set to be performed after the quadrature detection process of Step S202. These settings, however, are merely for the sake of convenience of description. In Step S303 of the quadrature detection process of FIG. 27, the post-distortion symbol points are reproduced based on the TMCC signal demodulated beforehand.

In Step S304, the phase error table generating section 558 generates a phase error table based on substantially the same post-distortion symbol point information as the averaged transmission signal point arrangement signals, and writes the table in the phase error table 554.

In Step S305, the LF 555 generates a control signal based on the signals from the phase error table 554. In Step S306, the NCO 556 generates a carrier signal to be used in complex multiplication based on the control signal generated by the LF 555.

The PLL process of the complex multiplying section 551, the RRFs 552 and 553, the phase error table 554, the LF 555, and the NCO 556 functions to stop rotation of a phase of a reception signal.

The above processes are repeated until an end thereof is determined to have been instructed in Step S307.

Next, details of the LDPC code decoding process of Step S204 of FIG. 26 will be described with reference to FIG. 28. FIG. 28 is a flowchart describing the LDPC code decoding process of the LDPC code decoding unit of the reception device of the present technology. In other words, it is a process executed by the LDPC code decoding unit 514 of FIGS. 23 and 25 in Step S204.

In Step S351, the post-distortion symbol point reproducing section 581 reproduces post-distortion symbol points based on distortion information in the decoded TMCC information. The distortion information is generated based on the averaged transmission signal point arrangement signals, and based on this distortion information, substantially the same post-distortion symbol point information as the averaged transmission signal point arrangement signals is generated. In other words, the post-distortion symbol point reproducing section 581 generates signals that offset distortion.

In Step S352, the likelihood table generating section 582 generates a likelihood table based on substantially the same post-distortion symbol point information as the averaged transmission signal point arrangement signals and writes the table in the likelihood table 583.

In Step S353, the decoding section 584 decodes an LDPC code from the I and Q signals supplied from the quadrature detection unit 512 based on the likelihood table 583 and supplies the decoded signal to the energy inverse-spread unit 515 of FIG. 23.

The above processes are repeated until an end of the processes is determined to have been instructed in Step S354.

As described above, in the first embodiment, the distortion information is set to be detected by the reference device 301, supplied to the transmission device 201, and transmitted from the transmission device 201 to the reception device 501. Then, based on the distortion information, the reception device 501 is set to generate substantially the same post-distortion symbol point information as the averaged transmission signal point arrangement signals. Thus, the transmission-signal-point-arrangement-information extracting section and the transmission-signal-point-arrangement-information averaging section can be omitted in the reception device 501. As a result, the following effects can be exhibited.

(1) A latency time of the averaging process is unnecessary.
(2) Demodulation or decoding can be performed by compensating nonlinear distortion at a higher speed
(3) Synchronization performance can be enhanced.
(4) A channel tuning time can be shortened.
(5) Manufacturing costs of a reception device can be reduced.
(6) By transmitting distortion information before switching of a modulation signal, the distortion information can be utilized in a moment after switching, and can be used in synchronization circuits and likelihood calculation.

### <Second embodiment (timer)>

### [Transmission device]

Configurations and operations the transmission device 201 and the reference device 301 of the second embodiment are the same as in the first embodiment. Repetitive description thereof will be omitted.

### [Reception device]

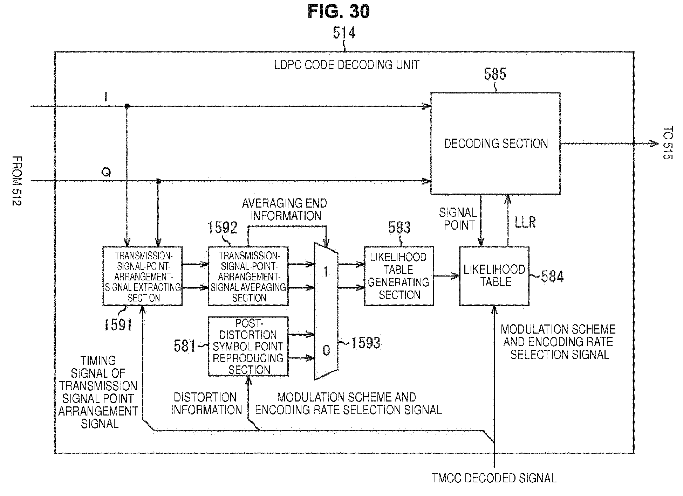

The basic configuration and operation of the reception device 501 according to the second embodiment are the same as in the first embodiment shown in FIGS. 23 and 26. Repetitive description thereof will be omitted. However, the quadrature detection unit 512 and the LDPC code decoding unit 514 of the reception device 501 are configured like the quadrature detection unit 512 and the LDPC code decoding unit 514 shown in FIGS. 29 and 30, unlike those in the first embodiment.

FIG. 29 is a block diagram illustrating a configuration of the quadrature detection unit 512 of the reception device 501 according to the second embodiment of the present technology. In other words, the quadrature detection unit 512 of the second embodiment has the complex multiplying section 551, the RRFs 552 and 553, the phase error table 554, the LF 555, the NCO 556, and the phase error table generating section 558. In addition, the quadrature detection unit 512 has a transmission-signal-point-arrangement-signal extracting section 559, a transmission-signal-point-arrangement-signal averaging section 1001, and a selecting section 1002. Further, the quadrature detection unit 512 of the second embodiment has the post-distortion symbol point reproducing section 557 like the quadrature detection unit 512 of the first embodiment.

The complex multiplying section 551, the RRFs 552 and 553, the phase error table 554, the LF 555, the NCO 556, and the phase error table generating section 558 have the same functions as those of the quadrature detection unit 512 of the first embodiment of FIG. 24.

The transmission-signal-point-arrangement-signal extracting section 559 extracts transmission signal point arrangement signals from an output of the RRFs 352 and 353. The transmission-signal-point-arrangement-signal extracting section 559 has received supply of a timing signal of the transmission signal point arrangement signals included in a demodulated TMCC signal. The transmission-signal-point-arrangement-signal averaging section 1001 averages the extracted transmission signal point arrangement signals. The transmission-signal-point-arrangement-signal extracting section 559 and the transmission-signal-point-arrangement-signal averaging section 1001 have the same functions as the transmission-signal-point-arrangement-signal extracting section 357 and the transmission-signal-point-arrangement-signal averaging section 358 of the quadrature detection unit 312 (FIG. 18) of the reference device 301. The post-distortion symbol point reproducing section 557 has the same function as that of the quadrature detection unit 512 of the first embodiment of FIG. 24.

The transmission-signal-point-arrangement-signal averaging section 1001 of the second embodiment, however, includes a timer which outputs averaging end information that indicates completion of an averaging process. The averaging end information can be the value "1" when an averaging process ends, and the value "0" when the process has not ended (before and during an averaging process). For example, when it is necessary to average 100 symbols, the process is not ended from the first symbol to the 99^{th} symbol, and is ended for the 100^{th} and following symbols. While the form of a moving average is taken for the 100^{th} and following symbols, an operation of continuously calculating the average value of the latest 100 symbols at all times is performed.

The selecting section 1002 selects an output of the transmission-signal-point-arrangement-signal averaging section 1001 when the averaging end information indicates an end, and selects an output of the post-distortion symbol point reproducing section 557 when the information indicates a non-end. The selected signal is supplied to the phase error table generating section 558.

As is obvious from comparison of FIG. 29 to FIG. 24, the transmission-signal-point-arrangement-signal extracting section 559, the transmission-signal-point-arrangement-signal averaging section 1001, and the selecting section 1002 which are not provided in the quadrature detection unit 512 of FIG. 24 are provided in the quadrature detection unit 512 of FIG. 29.

FIG. 30 is a block diagram illustrating a configuration of the LDPC code decoding unit 514 of the reception device 501 according to the second embodiment of the present technology. In other words, the LDPC code decoding unit 514 of the second embodiment has the likelihood table generating section 582, the likelihood table 583, and the decoding section 584. These functions are the same as those of the LDPC code decoding unit 514 of the first embodiment of FIG. 25.

The LDPC code decoding unit 514 of FIG. 30 also has a transmission-signal-point-arrangement-signal extracting section 1591, a transmission-signal-point-arrangement-signal averaging section 1592, and a selecting section 1593.

The functions of the transmission-signal-point-arrangement-signal extracting section 1591 and the transmission-signal-point-arrangement-signal averaging section 1592 are the same as those of the transmission-signal-point-arrangement-signal extracting section 381 and the transmission-signal-point-arrangement-signal averaging section 382 of the LDPC code decoding unit 314 of the reference device 301 of FIG. 19.

The transmission-signal-point-arrangement-signal averaging section 1592 of the second embodiment, however, has the same function as the transmission-signal-point-arrangement-signal averaging section 1001 of FIG. 29, and includes a timer which outputs averaging end information that indicates completion of an averaging process.

The selecting section 1593 selects an output of the transmission-signal-point-arrangement-signal averaging section 1592 of when the averaging end information indicates an end, and selects an output of the post-distortion symbol point reproducing section 581 when the information indicates a non-end. The selected signal is supplied to the likelihood table generating section 582.

As is obvious from comparison of FIG. 30 to FIG. 25, the transmission-signal-point-arrangement-signal extracting section 1591, the transmission-signal-point-arrangement-signal averaging section 1592, and the selecting section 1593 which are not provided in the LDPC code decoding unit 514 of FIG. 25 are provided in the LDPC code decoding unit 514 of FIG. 30.

### [Quadrature detection process]

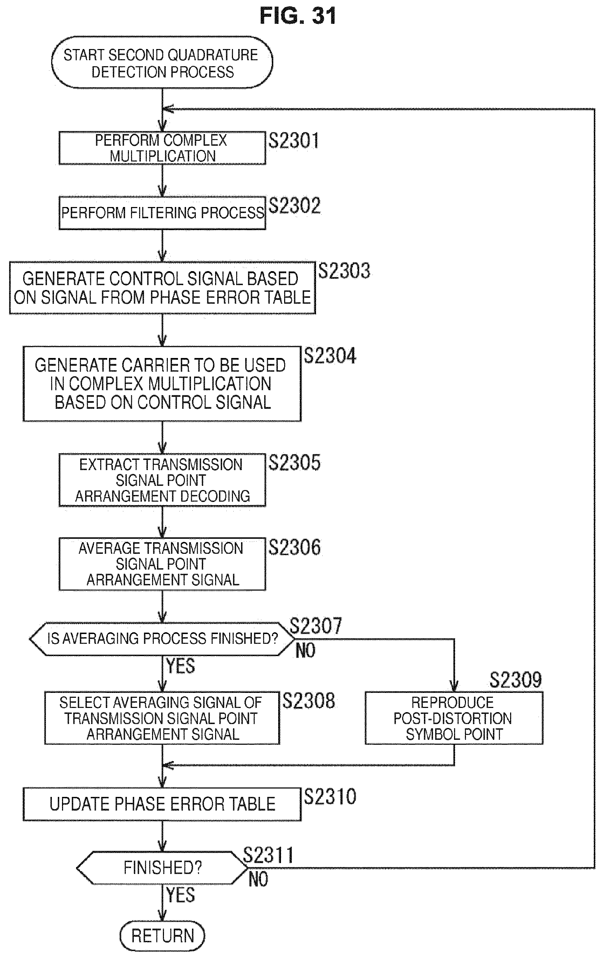

Next, a quadrature detection process of the quadrature detection unit 512 of FIG. 29 will be described with reference to FIG. 31. FIG. 31 is a flowchart describing the quadrature detection process of the quadrature detection unit 512 of the reception device 501 according to the second embodiment of the present technology.

In Step S2301, the complex multiplying section 551 executes a complex multiplication process to perform quadrature detection. In Step S2302, the RRFs 552 and 553 filter the I and Q signals output by the complex multiplying section 551. In Step S2303, the LF 555 generates a control signal based on signals from the phase error table. In Step S2304, the NCO 556 generates a carrier signal to be used in complex multiplication based on the control signal generated by the LF 555.

The PLL process of the complex multiplying section 551, the RRFs 552 and 553, the phase error table 554, the LF 555, and the NCO 556 functions to stop rotation of a phase of a reception signal.

In Step S2305, the transmission-signal-point-arrangement-signal extracting section 559 extracts transmission signal point arrangement signals from the output of the RRFs 552 and 553. In Step S2306, the transmission-signal-point-arrangement-signal averaging section 1001 averages the transmission signal point arrangement signals. The transmission-signal-point-arrangement-signal averaging section 1001 causes the timer to operate according to the averaging process to generate averaging end information, and supplies the information to the selecting section 1002.

In Step S2307, the selecting section 1002 determines whether the averaging process has ended based on the averaging end information. When the averaging process has ended, the selecting section 1002 selects an averaging signal of the transmission signal point arrangement signals in Step S2308.

When the averaging process has not ended, the post-distortion symbol point reproducing section 557 reproduces post-distortion symbol points based on distortion information included in a demodulated TMCC signal in Step S2309. The selecting section 1002 selects a reproduced post-distortion symbol point, and supplies the point to the phase error table generating section 558. Accordingly, the phase error table 558 which enables accurate demodulation even when distortion is present in reception signal points is generated. Thus, the phase error table generating section 558 and the phase error table 554 compensate distortion of reception signal points.

In Step S2310, the phase error table generating section 558 updates the phase error table based on the reproduced post-distortion symbol points or the averaged transmission signal point arrangement signals. The above-described processes of Steps S2301 to S2304 are repeated based on the updated phase error table.

The above processes are repeated until an end is determined to have been instructed in Step S2311.

### [LDPC code decoding process]

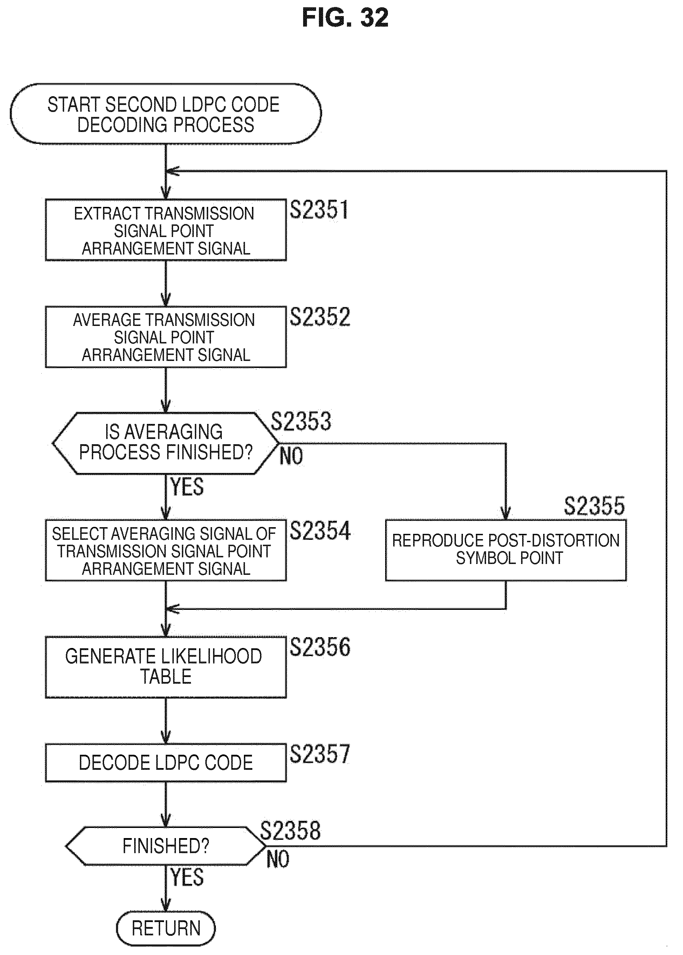

Next, details of the LDPC code decoding process executed by the LDPC code decoding unit 514 of FIG. 30 will be described with reference to FIG. 32. FIG. 32 is a flowchart describing the LDPC code decoding process of the LDPC code decoding unit 514 of the reception device 501 according to the second embodiment of the present technology.

In Step S2351, the transmission-signal-point-arrangement-signal extracting section 1591 extracts transmission signal point arrangement signals from the I and Q signals supplied by the quadrature detection unit 512. In Step S2352, the transmission-signal-point-arrangement-signal averaging section 1592 averages the transmission signal point arrangement signals. The transmission-signal-point-arrangement-signal averaging section 1592 causes the timer to operate according to the averaging process to generate averaging end information, and supplies the information to the selecting section 1593.

In Step S2353, the selecting section 1593 determines whether the averaging process has ended based on the averaging end information. When the averaging process has ended, the selecting section 1593 selects an averaging signal of the transmission signal point arrangement signals and supplies the signal to the likelihood table generating section 582 in Step S2354.

When the averaging process has not ended, the post-distortion symbol point reproducing section 581 reproduces post-distortion symbol points based on distortion information included in a demodulated TMCC signal in Step S2355. The selecting section 1593 selects a reproduced post-distortion symbol point, and supplies the point to the likelihood table generating section 582.

In Step S2356, the likelihood table generating section 582 generates a likelihood table based on the reproduced post-distortion symbol points or the averaged transmission signal point arrangement signals, and writes the table in the likelihood table 583.

In Step S2357, the decoding section 584 decodes an LDPC code from the I and Q signals supplied by the quadrature detection unit 512 based on the likelihood table 583, and supplies the decoded signal to the energy inverse-spread unit 515 of FIG. 23.

The above processes are repeated until an end of the processes is determined to have been instructed in Step S2358.

In the second embodiment, when the averaging process of the transmission signal point arrangement signals has not ended, post-distortion symbol points are reproduced, and based on the reproduced points, the phase error table or the likelihood table is generated. Thus, the problems of time taken to perform the averaging process on the transmission signal point arrangement signals and difficulty performing the process at a high speed can be solved.

Note that advance distortion compensation to be described in a third embodiment below can also be used in the first and second embodiments. Accordingly, distortion of reception signals can be further reduced.

### <Third embodiment (advance distortion compensation)>

### [Transmission device]

In the first and second embodiments described above, distortion information detected by the reference device 301 is transmitted from the transmission device 201 to the reception device 501, and distortion is compensated in the reception device 501 based on the distortion information. On the other hand, in the third embodiment, distortion compensation is performed in advance in the transmission device 201 based on detected distortion information.

Although a configuration of the transmission device 201 according to the third embodiment is the same as that shown in FIG. 10 and thus description thereof is omitted, the distortion compensation unit 213 is used in this embodiment.

### [Transmission process]

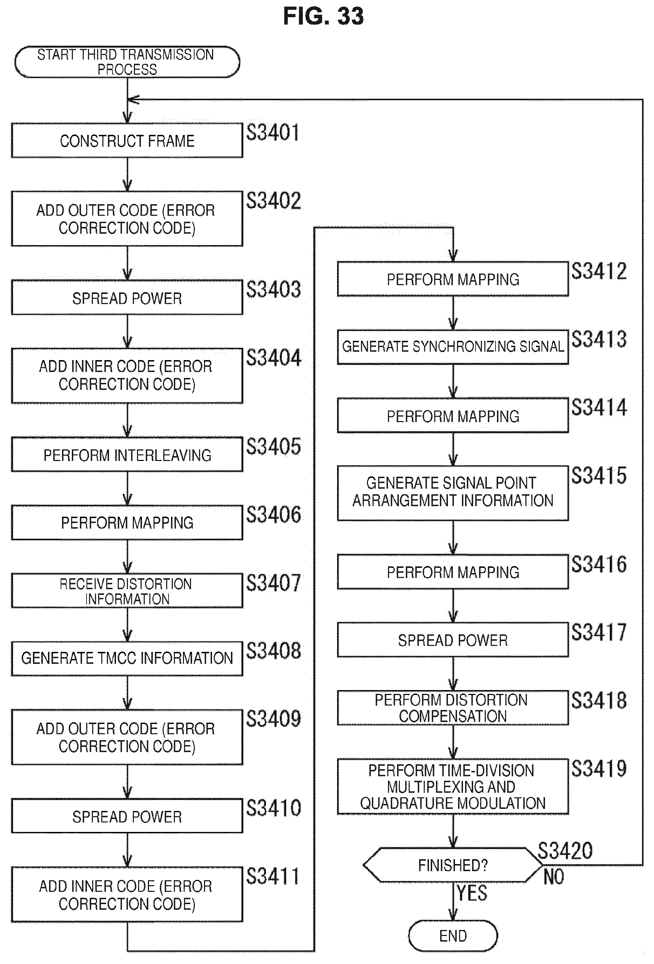

Herein, a transmission process of the third embodiment will be described with reference to FIG. 33. FIG. 33 is a flowchart describing the transmission process of the transmission device according to the third embodiment of the present technology.

In Step S3401, the frame constructing section 221 constructs a frame with input signals in the TLV format and TS format.

In Step S3402, the outer code error correction adding section 222 adds an error correction code of an outer code including a BCH code to the signals constructing the frame. In Step S3403, the power spread section 223 spreads power of the signal to which the error correction code has been added.

In Step S3404, the inner code error correction adding section 224 adds an error correction code of an inner code including an LDPC code to the signal of which power has been spread. In Step S3405, the bit interleaving section 225 performs bit interleaving on a signal among the input signals of which the modulation scheme is 8PSK, 16APSK, or 32APSK. A signal of other modulation scheme is not interleaved.

In Step S3406, the mapping section 226 performs mapping on the signals supplied from the inner code error correction adding section 224 and the bit interleaving section 225 using a designated modulation scheme among the 5 types of modulation schemes.

In Step S3407, the receiving section 241 receives the distortion information. This distortion information is transmitted after being generated in the process of Step S158 of FIG. 21 by the distortion information generating section 360 of the quadrature detection unit 312 shown in FIG. 18 of the reference device 301 of FIG. 17 described above. That is, this distortion information is information obtained as a result of an operation in which a signal that the transmission device 201 has already transmitted via the satellite 114 is received by the reference device 301 and distortion of the received signal is actually detected.

Types of distortion information are the same as in the first embodiment.

In Step S3408, the TMCC information generating section 231 generates TMCC information based on transmission parameters (TMCC1, TMCC2, ..., TMCCk) of when each input stream is transmitted.

A configuration of the TMCC information according to the third embodiment is basically the same as that in the first embodiment. In other words, the information is configured as shown in FIG. 12. Instead of distortion information, however, distortion compensation information is inserted into the extension information. The distortion compensation information is information indicating that the transmission device 201 has performed distortion compensation, and when distortion compensation has been performed, the value of the information is set to, for example, "1," and when it has not been performed, the value is set to "0."

In Step S3409, the outer code error correction adding section 232 adds an error correction code of an outer code including a BCH code to the TMCC information generated by the TMCC information generating section 231. In Step S3410, the power spread section 233 spreads power of the signal to which the error correction code has been added.

In Step S3411, the inner code error correction adding section 234 adds an error correction code of an inner code including an LDPC code to the signal of which power has been spread.

In Step S3412, the mapping section 235 performs mapping on the signal supplied from the inner code error correction adding section 234 using the modulation scheme of pi (the Greek letter)/2-shifted BPSK.

In Step S3413, the synchronizing signal generating section generates synchronizing signals. In Step S3414, the mapping section 237 performs mapping on the synchronizing signals using the modulation scheme of pi (the Greek letter)/2-shifted BPSK.

In Step S3415, the signal point arrangement information generating section 238 generates signal point arrangement information. This signal point arrangement information is as described with reference to FIG. 15. In Step S3416, the mapping section 239 performs mapping on the signal point arrangement information using a designated modulation scheme among the 5 types of modulation schemes. In Step S3417, the power spread section 240 spreads power of the mapped signal point arrangement information.

Note that, although the process of the main information signal in the main signal system 211 from Step S3401 to Step S3406 and the process of the control signal in the control signal system 212 from Step S3407 to Step S3417 are described in a time-series manner for convenience, they may be performed in parallel in practice.

In Step S3418, the distortion compensation unit 213 compensates distortion of the information signals input from the main signal system 211 and the control signal system 212 based on the distortion information received in the process of Step S3407. This distortion compensation is complementary compensation in consideration of nonlinearity caused by the satellite 114 so that the characteristic becomes linear, i.e., nonlinearity is offset. That is, transmission signal points are compensated based on, for example, the inverse vector to the differential vector of the vector of a transmission signal point and the vector of a reception signal point.

In Step S3419, the time-division multiplexing and quadrature modulation unit 214 performs time-division multiplexing, on the information signals from the main signal system 211 and the control signal system 212 that have undergone distortion compensation in advance, then performs quadrature modulation, and transmits the signals.

The above processes are repeated until an end thereof is determined to have been instructed in Step S3420.

### [Reference device]

A configuration and operation of the reference device 301 according to the third embodiment are the same as those in the first embodiment, i.e., those described with reference to FIGS. 17 to 22.

### [Reception device]

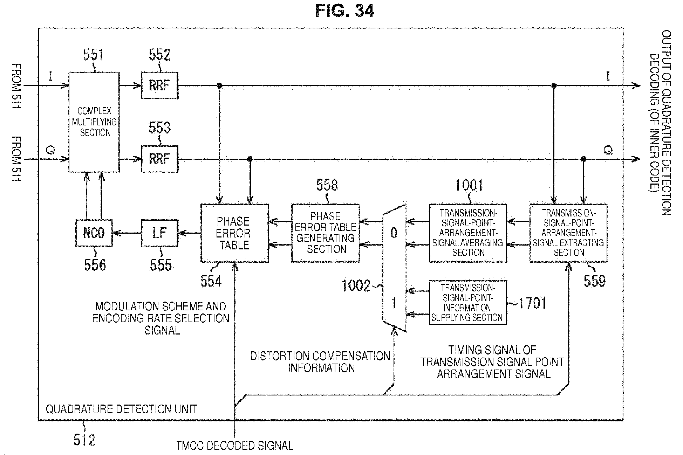

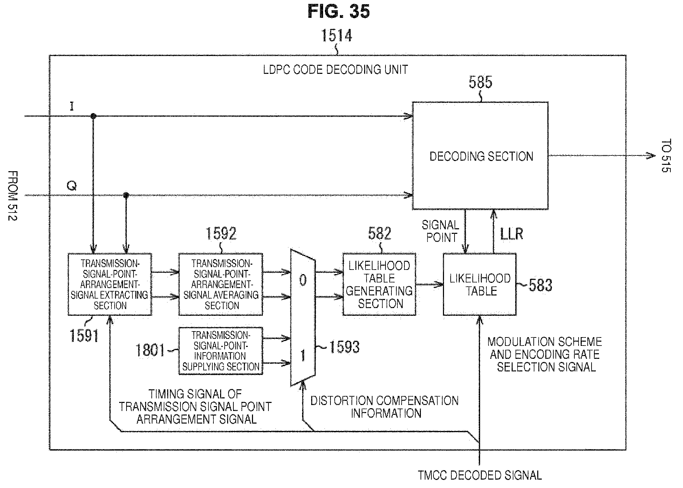

The basic configuration and operation of the reception device 501 according to the third embodiment are the same as those in the first embodiment shown in FIGS. 23 and 26. Repetitive description thereof is omitted. The quadrature detection unit 512 and the LDPC code decoding unit 514 of the reception device 501, however, are configured as the quadrature detection unit 512 and the LDPC code decoding unit 514 of FIGS. 34 and 35, unlike those in the first embodiment.

FIG. 34 is a block diagram illustrating a configuration of the quadrature detection unit 512 of the reception device 501 according to the third embodiment of the present technology. In other words, the quadrature detection unit 512 of the third embodiment has the complex multiplying section 551, the RRFs 552 and 553, the phase error table 554, the LF 555, the NCO 556, and the phase error table generating section 558. In addition, the quadrature detection unit 512 has the transmission-signal-point-arrangement-signal extracting section 559, the transmission-signal-point-arrangement-signal averaging section 1001, a transmission-signal-point-information supplying section 1701, and the selecting section 1002.

The complex multiplying section 551, the RRFs 552 and 553, the phase error table 554, the LF 555, the NCO 556, and the phase error table generating section 558 have the same functions as those of the quadrature detection unit 512 according to the first embodiment of FIG. 24.

The transmission-signal-point-arrangement-signal extracting section 559 extracts transmission signal point arrangement signals from outputs of the RRFs 352 and 353. The transmission-signal-point-arrangement-signal extracting section 559 has received supply of a timing signal of the transmission signal point arrangement signals included in a demodulated TMCC signal. The transmission-signal-point-arrangement-signal averaging section 1001 averages the extracted transmission signal point arrangement signals. These transmission-signal-point-arrangement-signal extracting section 559 and the transmission-signal-point-arrangement-signal averaging section 1001 have the same functions as the transmission-signal-point-arrangement-signal extracting section 357 and the transmission-signal-point-arrangement-signal averaging section 358 of the quadrature detection unit 312 (FIG. 18) of the reference device 301.

The transmission-signal-point-information supplying section 1701 supplies transmission signal point information. The transmission signal point information is expressed by absolute coordinates or relative coordinates of a transmission signal point, i.e., coordinates with no distortion. The transmission signal point information is a reference signal for demodulating a signal with no distortion, i.e., a signal of which distortion has been compensated. The selecting section 1002 selects an output of the transmission-signal-point-arrangement-signal averaging section 1001 or the transmission-signal-point-information supplying section 1701 based on distortion compensation information included in decoded TMCC information. The selecting section 1002 selects the output of the transmission-signal-point-information supplying section 1701 when the distortion compensation information indicates that distortion has been compensated, and selects the output of the transmission-signal-point-arrangement-signal averaging section 1001 when the information indicates that distortion has not been compensated. The selected signal is supplied to the phase error table generating section 558.

As is obvious from comparison of FIG. 34 to FIG. 29, the post-distortion symbol reproducing section 557 of FIG. 29 is omitted in the quadrature detection unit 512 of FIG. 34. Instead, the transmission-signal-point-information supplying section 1701 is provided. In addition, the selecting section 1002 controls the selection based on the distortion compensation information, rather than an averaging end signal.

FIG. 35 is a block diagram illustrating a configuration of the LDPC code decoding unit 514 of the reception device 501 according to the third embodiment of the present technology. In other words, the LDPC code decoding unit 514 of the third embodiment has the likelihood table generating section 582, the likelihood table 583, and the decoding section 584. These functions are the same as those of the LDPC code decoding unit 514 of the first embodiment of FIG. 25 and the second embodiment of FIG. 30.

The LDPC code decoding unit 514 also has the transmission-signal-point-arrangement-signal extracting section 1591, the transmission-signal-point-arrangement-signal averaging section 1592, a transmission-signal-point-information supplying section 1801, and the selecting section 1593.

The functions of the transmission-signal-point-arrangement-signal extracting section 1591 and the transmission-signal-point-arrangement-signal averaging section 1592 are the same as those of the transmission-signal-point-arrangement-signal extracting section 381 and the transmission-signal-point-arrangement-signal averaging section 382 of the LDPC code decoding unit 314 of the reference device 301 of FIG. 19. In other words, the functions of the transmission-signal-point-arrangement-signal extracting section 1591 and the transmission-signal-point-arrangement-signal averaging section 1592 are the same as those in the second embodiment of FIG. 30. The transmission-signal-point-information supplying section 1801 supplies transmission signal point information. The transmission signal point information is expressed by absolute coordinates or relative coordinates of a transmission signal point, i.e., coordinates with no distortion. The transmission signal point information is a reference signal for decoding a signal with no distortion, i.e., a signal of which distortion has been compensated. That is, the function of the transmission-signal-point-information supplying section 1801 is the same as that of the transmission-signal-point-information supplying section 1701 of FIG. 34.

The selecting section 1593 selects an output of the transmission-signal-point-arrangement-signal averaging section 1592 or the transmission-signal-point-information supplying section 1801 based on distortion compensation information of decoded TMCC information. The selecting section 1593 selects the output of the transmission-signal-point-information supplying section 1801 when the distortion compensation information indicates that distortion has been compensated, and selects the output of the transmission-signal-point-arrangement-signal averaging section 1592 when the information indicates that distortion has not been compensated. The selected signal is supplied to the likelihood table generating section 582.

As is obvious from comparison of FIG. 35 to FIG. 30, the post-distortion symbol reproducing section 581 of FIG. 30 is omitted in the LDPC code decoding unit 514 of FIG. 35. Instead, the transmission-signal-point-information supplying section 1801 is provided.

Since distortion compensation is performed in advance in the transmission device 201 in the third embodiment, the coordinates of reception signal points substantially coincide with the coordinates of transmission signal points. Thus, by generating the phase error table 554 and the likelihood table 583 based on transmission signal point information, reception signal points can be accurately extracted and demodulated.

### [Quadrature detection process]

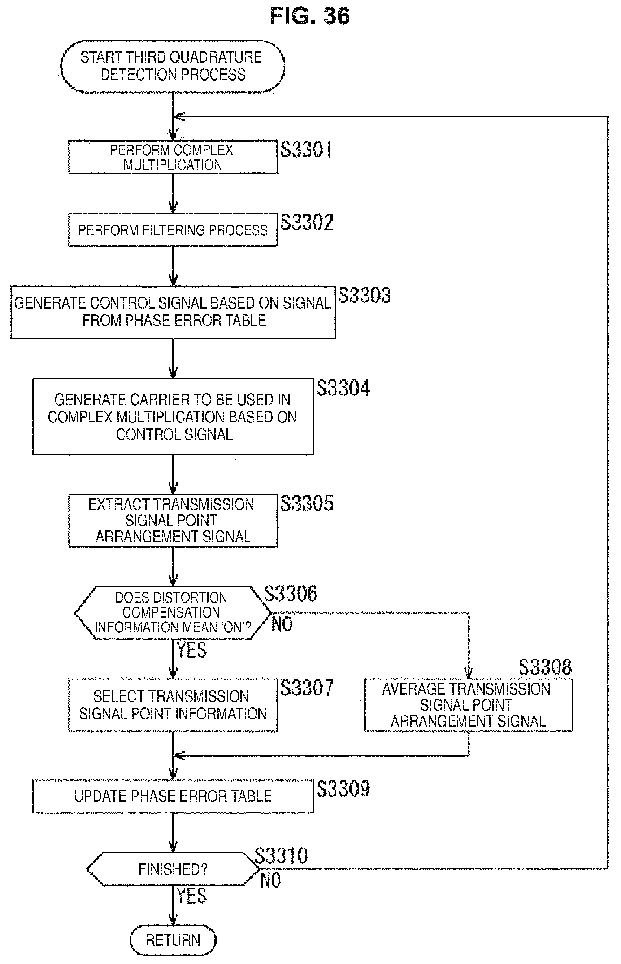

Next, a quadrature detection process of the quadrature detection unit 512 of FIG. 34 will be described with reference to FIG. 36. FIG. 36 is a flowchart describing the quadrature detection process of the quadrature detection unit 512 of the reception device 501 according to the third embodiment of the present technology.

In Step S3301, the complex multiplying section 551 executes a complex multiplication process to perform quadrature detection. As will be described below, a carrier signal supplied from the NCO 556 is generated based on the transmission signal point information that is a reference signal through the processes of Steps S3307 and S3309. Thus, in this case, the complex multiplying section 551 demodulates the distortion-compensated information signal selected by the channel selection unit 511 of Step S201 of FIG. 26 to be the original signal using the transmission signal point information.

In Step S3302, the RRFs 552 and 553 filter the I and Q signals output by the complex multiplying section 551. In Step S3303, the LF 555 generates a control signal based on the signals from the phase error table. In Step S3304, the NCO 556 generates a carrier signal using complex multiplication based on the control signal generated by the LF 555.

The PLL process of the complex multiplying section 551, the RRFs 552 and 553, the phase error table 554, the LF 555, and the NCO 556 functions to stop rotation of a phase of a reception signal.

In Step S3305, the transmission-signal-point-arrangement-signal extracting section 559 extracts transmission signal point arrangement signals from outputs of the RRFs 552 and 553. In Step S3306, the selecting section 1002 determines whether the distortion compensation information included in the decoded TMCC information means 'on.' When the distortion compensation information means 'on,' that is, when the distortion compensation information indicates that distortion compensation has been performed by the transmission device 201, the selecting section 1002 selects the transmission signal point information in Step S3307.

When distortion compensation has been performed by the transmission device 201, the coordinates of reception signal points substantially coincide with the coordinates of transmission signal points. Thus, by generating a phase error table based on the transmission signal point information, the reception signal points can be accurately extracted and demodulated.

When the distortion compensation information means 'off,' than is, when the distortion compensation information indicates that distortion compensation has not been performed by the transmission device 201, the transmission-signal-point-arrangement-signal averaging section 1001 averages transmission signal point arrangement signals in Step S3308.

In Step S3309, the phase error table generating section 558 updates the phase error table based on the distortion compensation information or the averaged transmission signal point arrangement signals. The processes of Steps S3301 to S3304 are repeated based on the updated phase error table.

The above processes are repeated until an end thereof is determined to have been instructed in Step S3310.

### [LDPC code decoding process]

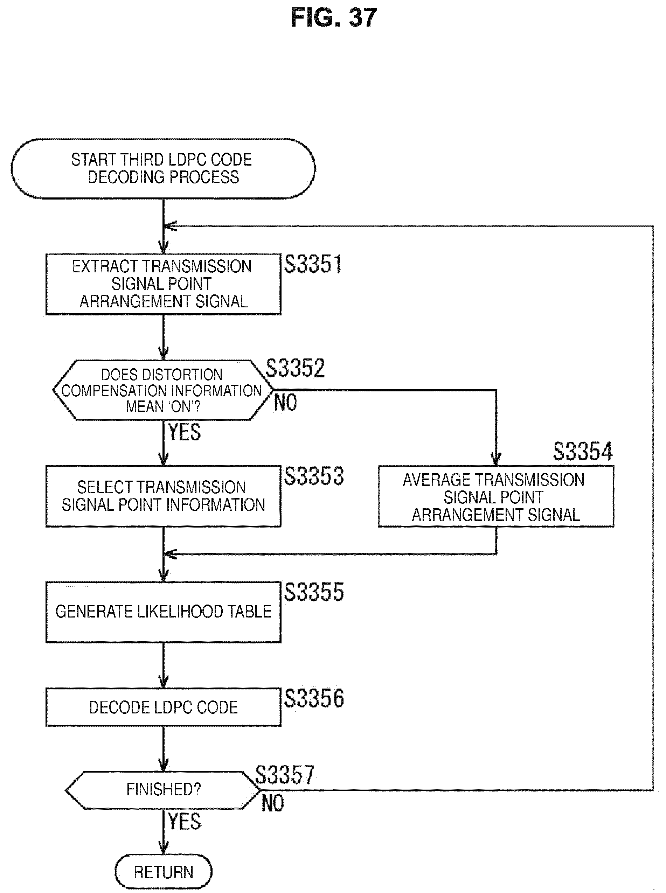

Next, details of an LDPC code decoding process executed by the LDPC code decoding unit 514 of FIG. 35 will be described with reference to FIG. 37. FIG. 37 is a flowchart describing the LDPC code decoding process of the LDPC code decoding unit of the reception device according to the third embodiment of the present technology.

In Step S3351, the transmission-signal-point-arrangement-signal extracting section 1591 extracts transmission signal point arrangement points from the I and Q signals supplied from the quadrature detection unit 512. In Step S3352, the selecting section 1593 determines whether the distortion compensation information included in the decoded TMCC information means 'on.' When the distortion compensation information means 'on,' i.e., when the distortion compensation information indicates that distortion compensation has been performed by the transmission device 201, the selecting section 1593 selects the transmission signal point information in Step S3353.

When distortion compensation has been performed by the transmission device 201, the coordinates of the transmission signal points substantially coincide with the coordinates of the transmission signal points. Thus, by generating the likelihood table 583 based on the transmission signal point information, the LDPC code can be accurately decoded.

When the distortion compensation information means 'off,' i.e., when the distortion compensation information indicates that distortion compensation has not been performed by the transmission device 201, the transmission-signal-point-arrangement-signal averaging section 1592 averages transmission signal point arrangement signals in Step S3354.

In Step S3355, the likelihood table generating section 582 generates a likelihood table based on the transmission signal point information or the averaged transmission signal point arrangement signals and writes the table in the likelihood table 583.

In Step S3356, the decoding section 584 decodes the LDPC code from the I and Q signals supplied by the quadrature detection unit 512 based on the likelihood table 583, and outputs the decoded signal. Through the processes of Steps S3352 and S3355, the likelihood table 583 is generated based on the transmission signal point information that is a reference signal. Thus, in this case, the decoding section 584 decodes the distortion-compensated information signal to the original signal using the transmission signal point information. The decoded signal is supplied to the energy inverse-spread unit 515 of FIG. 23.

The above processes are repeated until an end of the processes is determined to have been instructed in Step S3357.

In the third embodiment, distortion compensation is performed in advance in the transmission device 201. Thus, an averaging process with respect to transmission signal point arrangement signals is unnecessary, and the same effect as that of the first embodiment can be exhibited.

In the configuration examples of FIGS. 34 and 35, the transmission-signal-point-arrangement-signal extracting sections 559 and 1591, and the transmission-signal-point-arrangement-signal averaging sections 1001 and 1592 are provided. Accordingly, distortion can be compensated even when distortion compensation has not been performed in advance in the transmission device 201. When advance distortion compensation is performed at all times, however, those configurations can be omitted. In that case, distortion compensation information is also unnecessary.

Note that advance distortion compensation described in the third embodiment can also be used in the first and second embodiments. Accordingly, distortion of reception signals can be further reduced.

### <Modified example>

Although the cases in which the modulation schemes including pi (the Greek letter)/2-shifted BPSK, QPSK, 8PSK, 16APSK, and 32APSK are used have been described above, the present technology can also be applied when QAM is used. In addition, although distortion is set to be corrected when signals are transmitted in Japan via the satellite 114, an application target of the present technology is not limited thereto. As illustrated in FIG. 9, the present technology can be applied when information is transmitted via various kinds of transmission paths 145. For example, the technology can be applied to a satellite broadcasting standard of Europe (DVB). In this case, distortion information or distortion compensation information, for example, can be inserted into a Physical Layer Signal Code (PLSCODE), which is a control signal, by increasing the number of bits of the code or the like.

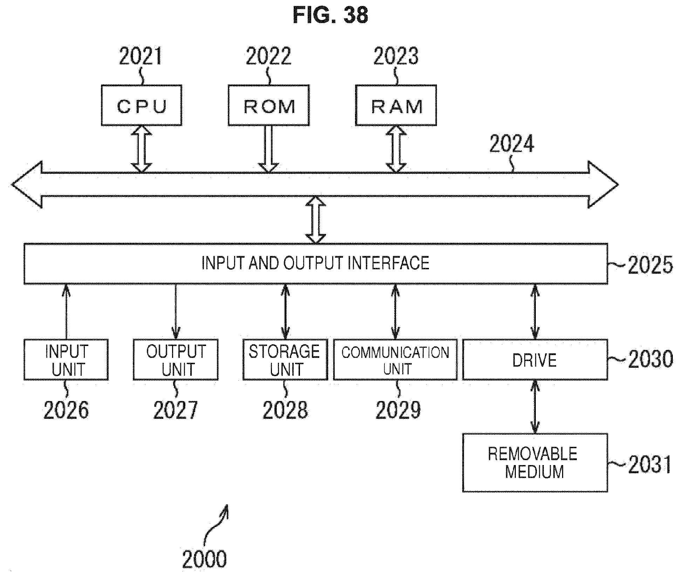

Note that the series of processes described above can be executed by hardware or software. When the series of processes described above is executed by software, a program constituting the software is installed in a computer incorporated into dedicated hardware from a network or a recording medium. In addition, various programs can be installed in, for example, a general-purpose personal computer 2000 illustrated in FIG. 38 which can execute various functions or the like from a network or a recording medium.

In FIG. 38, a central processing unit (CPU) 2021 executes various kinds of processes according to a program stored in a read only memory (ROM) 2022 or a program loaded in a random access memory (RAM) 2023 from a storage unit 2028. In addition, data and the like necessary for the CPU 2021 executing the various kinds of processes is also appropriately stored in the RAM 2023.

The CPU 2021, the ROM 2022, and the RAM 2023 are connected to one another via a bus 2024. In addition, an input and output interface 2025 is also connected to the bus 2024.

An input unit 2026 including a keyboard, a mouse, and the like and an output unit 2027 including a display such as a liquid crystal display (LCD), a speaker, and the like are connected to the input and output interface 2025. In addition, the storage unit 2028 including a hard disk and the like, a communication unit 2029 including a network interface such as a modem, or a LAN card, and the like are connected to the input and output interface 2025. The communication unit 2029 performs communication processes via a network such as the Internet.

Furthermore, a drive 2030 is connected to the input and output interface 2025 if necessary, and a removable medium 2031 such as a magnetic disk, an optical disc, a magneto-optical disc, or a semiconductor memory is appropriately loaded therein. In addition, a computer program read from such a removable medium is installed in the storage unit 2028 if necessary.

When the series of processes described above is executed by software, a program constituting the software is installed from a network such as the Internet or a recording medium including the removable medium 2031 or the like.

Note that this recording medium includes not only one configured as the removable medium 2031 shown in FIG. 38, which is distributed separately from the main body of a device to users to deliver programs and on which a program is recorded, such a magnetic disk (including a floppy disk (registered trademark)), an optical disc (including a compact disk-read only memory (CD-ROM), and a digital versatile disk (DVD)), a magneto-optical disk (Mini-Disk (MD; registered trademark)), or a semiconductor memory, but also one configured as a ROM 2022 or a hard disk included in the storage unit 2028 which is distributed to users while incorporated into the main body of the device in advance and a program is recorded thereon.

Note that the series of processes described in the present specification includes not only processes executed in a time series manner in the described order, but also processes executed in parallel or individually, not necessarily being executed in a time series manner.

In addition, an embodiment of the present technology is not limited to the above-described embodiments, and can be variously modified within the scope not deviating from the gist of the present technology.

### <Others>

The present technology may also be configured as below.
(1) A transmission device including:
   an acquisition unit configured to acquire distortion information which indicates distortion of an information signal which is based on nonlinearity of a transmission path of the information signal;
   a compensation unit configured to compensate the information signal to be transmitted using the acquired distortion information so that distortion of the received information signal is offset; and
   a transmission unit configured to transmit distortion compensation information which indicates that the information signal has been compensated by including the distortion compensation information in a control signal of the information signal.
(2) The transmission device according to (1),
   wherein the distortion information is expressed by any type of information including
   absolute coordinate information of all transmission signal points after distortion,
   absolute coordinate information of some transmission signal points after distortion,
   relative coordinate information of all other transmission signal points with respect to a transmission signal point that serves as a reference after distortion,
   relative coordinate information of some other transmission signal points with respect to a transmission signal point that serves as a reference after distortion,
   data of a graph with respect to input and output characteristics of a transmission path,
   relative coordinates of a reception signal point that has been affected by distortion of a transmission signal point, or
   a magnification ratio and a rotation angle of a radius with respect to an origin.
(3) The transmission device according to (1) or (2), wherein the distortion information is generated based on distortion detected by receiving the transmitted information signal as a reference or distortion obtained by detecting a characteristic of the transmission path in advance.
(4) The transmission device according to (1), (2), or (3), wherein the control signal is a TMCC signal of ARIB STD-B44.
(5) The transmission device according to (4), wherein the distortion information is generated based on a transmission signal point arrangement signal included in the TMCC signal.
(6) A signal transmission method of a transmission device, the signal transmission method including:
   a step of acquiring distortion information which indicates distortion of an information signal which is based on nonlinearity of a transmission path of the information signal;
   a step of compensating the information signal to be transmitted using the acquired distortion information so that distortion of the received information signal is offset; and
   a step of transmitting distortion compensation information which indicates that the information signal has been compensated by including the distortion compensation information in a control signal of the information signal.
(7) A program causing a computer to execute a process including:
   a step of acquiring distortion information which indicates distortion of an information signal which is based on nonlinearity of a transmission path of the information signal;
   a step of compensating the information signal to be transmitted using the acquired distortion information so that distortion of the received information signal is offset; and
   a step of transmitting distortion compensation information which indicates that the information signal has been compensated by including the distortion compensation information in a control signal of the information signal.
(8) A reception device including:
   an acquisition unit configured to acquire an information signal to be transmitted including distortion compensation information which indicates that distortion which is based on nonlinearity of a transmission path of the information signal has been compensated in a control signal;
   a supply unit configured to supply transmission signal point information for demodulating a signal of which distortion has been compensated when the distortion compensation information is acquired; and
   a demodulation unit configured to demodulate the information signal to an original signal using the supplied transmission signal point information.
(9) The reception device according to (8),
   wherein the distortion information is expressed by any type of information including
   absolute coordinate information of all transmission signal points after distortion,
   absolute coordinate information of some transmission signal points after distortion,
   relative coordinate information of all other transmission signal points with respect to a transmission signal point that serves as a reference after distortion,
   relative coordinate information of some other transmission signal points with respect to a transmission signal point that serves as a reference after distortion,
   data of a graph with respect to input and output characteristics of a transmission path,
   relative coordinates of a reception signal point that has been affected by distortion of a transmission signal point, or
   a magnification ratio and a rotation angle of a radius with respect to an origin.
(10) The reception device according to (8) or (9), wherein the distortion information is generated based on distortion detected by receiving the transmitted information signal as a reference or distortion obtained by detecting a characteristic of the transmission path in advance.
(11) The reception device according to (8), (9), or (10), wherein, when the distortion compensation information indicates that the information signal has not been compensated, the demodulation unit demodulates the information signal to an original signal using a signal obtained by averaging a transmission signal point arrangement signal included in the control signal.
(12) A signal reception method of a reception device, the signal reception method including:
   a step of acquiring an information signal to be transmitted including distortion compensation information which indicates that distortion which is based on nonlinearity of a transmission path of the information signal has been compensated in a control signal;
   a step of supplying transmission signal point information for demodulating a signal of which distortion has been compensated when the distortion compensation information is acquired; and
   a step of demodulating the information signal to an original signal using the supplied transmission signal point information.
(13) A program causing a computer to execute a process including:
   a step of acquiring an information signal to be transmitted including distortion compensation information which indicates that distortion which is based on nonlinearity of a transmission path of the information signal has been compensated in a control signal;
   a step of supplying transmission signal point information for demodulating a signal of which distortion has been compensated when the distortion compensation information is acquired; and
   a step of demodulating the information signal to an original signal using the supplied transmission signal point information.

### Reference Signs List

- 201: transmission device
- 211: main signal system
- 212: control signal system
- 213: distortion compensation unit
- 241: receiving section
- 501: reception device
- 511: channel selection unit
- 512: quadrature detection unit
- 513: TMCC decoding unit
- 514: LDPC code decoding unit
- 515: energy inverse-spread unit
- 516: BCH code decoding unit

## Claims

1. A transmission device comprising:
an acquisition unit configured to acquire distortion information which indicates distortion of an information signal which is based on nonlinearity of a transmission path of the information signal;
a compensation unit configured to compensate the information signal to be transmitted using the acquired distortion information so that distortion of the received information signal is offset; and
a transmission unit configured to transmit distortion compensation information which indicates that the information signal has been compensated by including the distortion compensation information in a control signal of the information signal.

2. The transmission device according to claim 1, wherein the distortion information is expressed by any type of information including
absolute coordinate information of all transmission signal points after distortion,
absolute coordinate information of some transmission signal points after distortion,
relative coordinate information of all other transmission signal points with respect to a transmission signal point that serves as a reference after distortion,
relative coordinate information of some other transmission signal points with respect to a transmission signal point that serves as a reference after distortion,
data of a graph with respect to input and output characteristics of a transmission path,
relative coordinates of a reception signal point that has been affected by distortion of a transmission signal point, or
a magnification ratio and a rotation angle of a radius with respect to an origin.

3. The transmission device according to claim 2, wherein the distortion information is generated based on distortion detected by receiving the transmitted information signal as a reference or distortion obtained by detecting a characteristic of the transmission path in advance.

4. The transmission device according to claim 3, wherein the control signal is a TMCC signal of ARIB STD-B44.

5. The transmission device according to claim 4, wherein the distortion information is generated based on a transmission signal point arrangement signal included in the TMCC signal.

6. A signal transmission method of a transmission device, the signal transmission method comprising:
a step of acquiring distortion information which indicates distortion of an information signal which is based on nonlinearity of a transmission path of the information signal;
a step of compensating the information signal to be transmitted using the acquired distortion information so that distortion of the received information signal is offset; and
a step of transmitting distortion compensation information which indicates that the information signal has been compensated by including the distortion compensation information in a control signal of the information signal.

7. A program causing a computer to execute a process including:
a step of acquiring distortion information which indicates distortion of an information signal which is based on nonlinearity of a transmission path of the information signal;
a step of compensating the information signal to be transmitted using the acquired distortion information so that distortion of the received information signal is offset; and
a step of transmitting distortion compensation information which indicates that the information signal has been compensated by including the distortion compensation information in a control signal of the information signal.

8. A reception device comprising:
an acquisition unit configured to acquire an information signal to be transmitted including distortion compensation information which indicates that distortion which is based on nonlinearity of a transmission path of the information signal has been compensated in a control signal;
a supply unit configured to supply transmission signal point information for demodulating a signal of which distortion has been compensated when the distortion compensation information is acquired; and
a demodulation unit configured to demodulate the information signal using the supplied transmission signal point information.

9. The reception device according to claim 8,
wherein the distortion information is expressed by any type of information including
absolute coordinate information of all transmission signal points after distortion,
absolute coordinate information of some transmission signal points after distortion,
relative coordinate information of all other transmission signal points with respect to a transmission signal point that serves as a reference after distortion,
relative coordinate information of some other transmission signal points with respect to a transmission signal point that serves as a reference after distortion,
data of a graph with respect to input and output characteristics of a transmission path,
relative coordinates of a reception signal point that has been affected by distortion of a transmission signal point, or
a magnification ratio and a rotation angle of a radius with respect to an origin.

10. The reception device according to claim 9, wherein the distortion information is generated based on distortion detected by receiving the transmitted information signal as a reference or distortion obtained by detecting a characteristic of the transmission path in advance.

11. The reception device according to claim 10, wherein, when the distortion compensation information indicates that the information signal has not been compensated, the demodulation unit demodulates the information signal to an original signal using a signal obtained by averaging a transmission signal point arrangement signal included in the control signal.

12. A signal reception method of a reception device, the signal reception method comprising:
a step of acquiring an information signal to be transmitted including distortion compensation information which indicates that distortion which is based on nonlinearity of a transmission path of the information signal has been compensated in a control signal;
a step of supplying transmission signal point information for demodulating a signal of which distortion has been compensated when the distortion compensation information is acquired; and
a step of demodulating the information signal using the supplied transmission signal point information.

13. A program causing a computer to execute a process including:
a step of acquiring an information signal to be transmitted including distortion compensation information which indicates that distortion which is based on nonlinearity of a transmission path of the information signal has been compensated in a control signal;
a step of supplying transmission signal point information for demodulating a signal of which distortion has been compensated when the distortion compensation information is acquired; and
a step of demodulating the information signal using the supplied transmission signal point information.

## Amended claims

### Amended claims under Art. 19.1 PCT

1. (currently amended) A transmission device comprising:
an acquisition unit configured to acquire distortion information which indicates distortion of an information signal which is based on nonlinearity of a transmission path of the information signal;
a compensation unit configured to execute distortion compensation on the information signal to be transmitted using the acquired distortion information so that distortion of the received information signal is offset; and
a transmission unit configured to transmit distortion compensation information which uses bit information to indicate whether the distortion compensation has been executed on the information signal by adding the distortion compensation information to the information signal as a part of a control signal of the information signal.

2. The transmission device according to claim 1, wherein the distortion information is expressed by any type of information including
absolute coordinate information of all transmission signal points after distortion,
absolute coordinate information of some transmission signal points after distortion,
relative coordinate information of all other transmission signal points with respect to a transmission signal point that serves as a reference after distortion,
relative coordinate information of some other transmission signal points with respect to a transmission signal point that serves as a reference after distortion,
data of a graph with respect to input and output characteristics of a transmission path,
relative coordinates of a reception signal point that has been affected by distortion of a transmission signal point, or
a magnification ratio and a rotation angle of a radius with respect to an origin.

3. The transmission device according to claim 2, wherein the distortion information is generated based on distortion detected by receiving the transmitted information signal as a reference or distortion obtained by detecting a characteristic of the transmission path in advance.

4. The transmission device according to claim 3, wherein the control signal is a TMCC signal of ARIB STD-B44.

5. The transmission device according to claim 4, wherein the distortion information is generated based on a transmission signal point arrangement signal included in the TMCC signal.

6. (currently amended) A signal transmission method of a transmission device, the signal transmission method comprising:
a step of acquiring distortion information which indicates distortion of an information signal which is based on nonlinearity of a transmission path of the information signal;
a step of executing distortion compensation on the information signal to be transmitted using the acquired distortion information so that distortion of the received information signal is offset; and
a step of transmitting distortion compensation information which uses bit information to indicate whether the distortion compensation has been executed on the information signal by adding the distortion compensation information to the information signal as a part of a control signal of the information signal.

7. (currently amended) A program causing a computer to execute a process including:
a step of acquiring distortion information which indicates distortion of an information signal which is based on nonlinearity of a transmission path of the information signal;
a step of executing distortion compensation on the information signal to be transmitted using the acquired distortion information so that distortion of the received information signal is offset; and
a step of transmitting distortion compensation information which uses bit information to indicate whether the distortion compensation has been executed on the information signal by adding the distortion compensation information to the information signal as a part of a control signal of the information signal.

8. (currently amended) A reception device comprising:
an acquisition unit configured to acquire an information signal to be transmitted with distortion compensation information added as a part of a control signal, the distortion compensation information using bit information to indicate whether distortion which is based on nonlinearity of a transmission path of the information signal has been compensated;
a supply unit configured to supply transmission signal point information for demodulating a signal of which distortion has been compensated when the distortion compensation information which indicates that distortion of the information signal has been compensated is acquired; and
a demodulation unit configured to demodulate the information signal using the supplied transmission signal point information.

9. The reception device according to claim 8, wherein the distortion information is expressed by any type of information including
absolute coordinate information of all transmission signal points after distortion,
absolute coordinate information of some transmission signal points after distortion,
relative coordinate information of all other transmission signal points with respect to a transmission signal point that serves as a reference after distortion,
relative coordinate information of some other transmission signal points with respect to a transmission signal point that serves as a reference after distortion,
data of a graph with respect to input and output characteristics of a transmission path,
relative coordinates of a reception signal point that has been affected by distortion of a transmission signal point, or
a magnification ratio and a rotation angle of a radius with respect to an origin.

10. The reception device according to claim 9, wherein the distortion information is generated based on distortion detected by receiving the transmitted information signal as a reference or distortion obtained by detecting a characteristic of the transmission path in advance.

11. (currently amended) The reception device according to claim 8, wherein, when the distortion compensation information indicates that the distortion of the information signal has not been compensated, the demodulation unit demodulates the information signal to an original signal using a signal obtained by averaging a transmission signal point arrangement signal included in the control signal.

12. (currently amended) A signal reception method of a reception device, the signal reception method comprising:
a step of acquiring an information signal to be transmitted with distortion compensation information added as a part of a control signal, the distortion compensation information using bit information to indicate whether distortion which is based on nonlinearity of a transmission path of the information signal has been compensated;
a step of supplying transmission signal point information for demodulating a signal of which distortion has been compensated when the distortion compensation information which indicates that distortion of the information signal has been compensated is acquired; and
a step of demodulating the information signal using the supplied transmission signal point information.

13. (currently amended) A program causing a computer to execute a process including:
a step of acquiring an information signal to be transmitted with distortion compensation information added as a part of a control signal, the distortion compensation information using bit information to indicate whether distortion which is based on nonlinearity of a transmission path of the information signal has been compensated;
a step of supplying transmission signal point information for demodulating a signal of which distortion has been compensated when the distortion compensation information which indicates that distortion of the information signal has been compensated is acquired; and
a step of demodulating the information signal using the supplied transmission signal point information.

Statement under Art. 19.1 PCT
Claims 1, 6, and 7 are amended to make it clearer that the transmission device transmits distortion compensation information which uses bit information to indicate whether the distortion compensation has been executed on the information signal by adding the distortion compensation information to the information signal as a part of a control signal of the information signal.

Claims 8, 12, and 13 are amended to make it clearer that the reception device acquires an information signal having distortion compensation information added as a part of a control signal, the distortion compensation information using bit information to indicate whether distortion which is based on nonlinearity of a transmission path of the information signal has been compensated.
